(19) Europäisches Patentamt
European Patent Office
Office européen des brevets

(11) EP 3 153 950 A1

(12) EUROPEAN PATENT APPLICATION

(43) Date of publication:
12.04.2017 Bulletin 2017/15

(51) Int Cl.:
G06F 3/042 (2006.01)    G02B 27/22 (2006.01)

(21) Application number: 16192824.7

(22) Date of filing: 07.10.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 08.10.2015 JP 2015200290
23.09.2016 JP 2016185880

(71) Applicant: Funai Electric Co., Ltd.
Daito
Osaka 574-0013 (JP)

(72) Inventor: CHIKAOKA, Atsuhiko
Daito, Osaka 574-0013 (JP)

(74) Representative: Isarpatent
Patent- und Rechtsanwälte Behnisch Barth
Charles
Hassa Peckmann & Partner mbB
Friedrichstrasse 31
80801 München (DE)

(54) **INPUT DEVICE**

(57) An input device (Ip) includes a position detector (43) that determine a first position based on a fact that a distance between a pointer (Fg) and a position detection plane (Iv) has become a predetermined length or smaller and to detect a position based on a fact that a movement speed of the pointer (Fg) has become a predetermined value or lower, and a position corrector (44) that determined a first position in the position detection plane (Iv) based on the position and the second position.

**Description**

**CROSS-REFERENCE TO RELATED APPLICATIONS**

This application is based on Japanese Patent Applications No. 2015-200290 filed October 8, 2015, and No. 2016-185880 filed September 23, 2016, contents of which are hereby incorporated by reference.

**BACKGROUND OF THE INVENTION**

**Field of the Invention**

The present invention relates to an input device that recognizes an input operation to a virtual user interface.

**Description of Related Art**

There are proposed input devices that accept a three-dimensional gesture input (see, for example, JP-A-2012-3690, PCT publication 2010/113397).

JP-A-2012-3690 discloses a user interface device including a transparent display, and a range image sensor for obtaining a range image through the transparent display, so as to accept a three-dimensional gesture input of a target object from the range image obtained by the range image sensor.

Using the user interface device having the above-mentioned structure, a three-dimensional gesture input of a target object (for example, a user's finger) is accepted, and hence various inputs are available.

In addition, PCT publication 2010/113397 discloses a display input device, which includes a proximity sensor for detecting an approach of a finger to a touch panel in a non-contact manner, and corrects coordinates on the touch panel obtained by the proximity sensor based on a user's sight line to correct an approaching position of a finger, so that an accurate approaching position can be obtained.

However, the structure described in JP-A-2012-3690 is not a structure for obtaining position information of a target object in a space, and it is difficult to accurately obtain a position of the target object in a depth direction, and it is difficult to accurately detect an input movement with respect to a three-dimensional image.

The structure described in PCT publication 2010/113397 is a structure for obtaining an approaching position corresponding to a coordinate change (such as a shake or a shift) even if a user's unintentional change occurs, and therefore a user's unintentional input operation may be detected.

**SUMMARY OF THE INVENTION**

The present invention is aimed at solving the above-mentioned problem, and it is an object of the present invention to accurately recognize an input operation to a virtual user interface disposed in a detection area.

An input device according to an aspect of the present invention includes a scan light source that emit inspection light for scanning a detection area, a light receiver that receive the inspection light after being reflected by a pointer, a position detector that detect a position of the pointer based on light received by the light receiver, and a position corrector that correct the position of the pointer on a position detection plane. The position corrector determines a first position in the position detection plane based on a position that a movement speed of the pointer has become a predetermined value or lower.

Because the input device according to this aspect of the present invention corrects the position of the pointer with respect to the position detection plane, it is prevented to perform position detection against user's intention. In this way, convenience for the user can be improved.

An input device according to another aspect of the present invention includes a scan light source that emit inspection light for scanning a detection area, a light receiver that receive the inspection light after being reflected by a pointer, a position detector that detect a position of the pointer based on light received by the light receiver, and a position corrector that correct the position of the pointer on a position detection plane. The position detector determines a position that a movement speed of the pointer has become a predetermined value or lower, and a second position based on a fact that a distance between the pointer and the position detection plane has become a predetermined length or smaller. The position corrector determines a first position in the position detection plane based on the position and the second position.

Because the input device according to this aspect of the present invention corrects the position of the pointer with respect to the position detection plane, it is prevented to perform position detection against user's intention. In this way, convenience for the user can be improved.

According to the present invention, it is possible to provide an input device that accurately recognizes an input operation with a virtual user interface disposed in a detection area.

**BRIEF DESCRIPTION OF THE DRAWINGS**

Fig. 1 is a schematic diagram of an input device according to the present invention.
Fig. 2 is a block diagram of an example of a position detector.
Fig. 3 is a schematic layout diagram of a light source and an optical scanner of the position detector illustrated in Fig. 2.
Fig. 4 is a schematic plan view of an optical scanner.

Fig. 5 is a diagram illustrating an optical scanning operation of the position detector.

Fig. 6 is a diagram illustrating a scan signal sent from a scan controller to an optical scanner.

Fig. 7 is a diagram illustrating a state where a detection area is being scanned with inspection light.

Fig. 8 is a diagram illustrating a state of receiving light reflected by a user's finger.

Fig. 9 is a diagram illustrating the user's finger in a state of operating a virtual user interface displayed on a position detection plane.

Fig. 10 is a diagram illustrating coordinates of the user's finger tip in a coordinate system of the position detection plane.

Fig. 11 is a flowchart of an input operation using the input device according to the present invention.

Fig. 12 is a flowchart illustrating a process of correcting a position of the user's finger.

Fig. 13 is a flowchart illustrating details of a position fixing process.

Fig. 14 is a diagram illustrating a state where an input operation is performed with the user's finger.

Fig. 15 is a diagram illustrating shakes in x, y and z directions of the user's finger when performing the input operation illustrated in Fig. 14.

Fig. 16 is a diagram illustrating the detection area used in another example of the input device according to the present invention.

Fig. 17 is a flowchart of the input operation using the input device according to the present invention.

Fig. 18 is a flowchart illustrating a process of correcting a position of the user's finger.

Fig. 19 is a diagram illustrating the input operation when the control illustrated in Figs. 17 and 18 is performed.

Fig. 20 is a diagram illustrating a state where input scanning is performed with a locus of the user's finger.

Fig. 21 is a diagram illustrating a movement of the user's finger on the position detection plane.

Fig. 22 is a flowchart illustrating a process of correcting a position of the user's finger.

Fig. 23 is a diagram illustrating operation positions of the user's finger when the position correction process is being performed.

## DETAILED DESCRIPTION OF THE PREFERRED EMBODIMENTS

An input device according to the present invention is described below with reference to the drawings.

<First Embodiment>

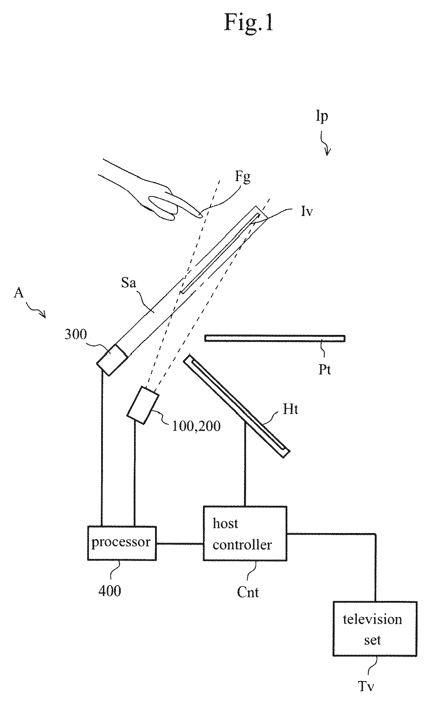

Fig. 1 is a schematic diagram of an input device according to the present invention. As illustrated in Fig. 1, an input device Ip includes a display Ht, an aerial imaging plate Pt, a position detector A, and a host controller Cnt. The input device Ip uses the display Ht and the aerial imaging plate Pt so as to display an image of a well-known user interface (such as a key board or a touch panel) for input operation as an aerial image viewed from the user (not shown). Then, the user moves a pointer (here, a user's finger Fg) so as to operate a virtual user interface displayed as the aerial image. A position (movement) of the user's finger Fg when operating the virtual user interface is detected by the position detector A, and a result of the detection is sent to the host controller Cnt (recognizing portion).

The host controller Cnt recognizes the input operation made by the user with the virtual user interface based on information of the virtual user interface displayed as the aerial image and the position information of the user's finger Fg. Then, information of the input operation is sent to an external apparatus to be operated (for example, a television set, an air conditioner, an audio apparatus, or the like; here, a television set Tv is exemplified).

The position detector A detects the user's finger Fg in a predetermined detection area Sa. In the detection area Sa, there is set a position detection plane Iv that is a reference plane when detecting the user's finger Fg, and the display Ht and the aerial imaging plate Pt generate the aerial image from which the user recognizes that the virtual user interface is disposed in the position detection plane Iv. The position detector A scans the detection area Sa with a light beam and receives light reflected or scattered by the user's finger Fg, so as to detect a position (three-dimensional coordinates), a movement, and the like of the user's finger Fg. The position detector A transmits information of the detected position and movement of the user's finger Fg in the position detection plane to the host controller Cnt.

The host controller Cnt is connected to the display Ht for generating the aerial image, so as to control operation of the display Ht. The host controller Cnt controls the display Ht to switch the aerial image based on the position information of the user's finger Fg from the position detector A. For example, aerial images of the virtual key board and the virtual touch panel are displayed (switched) based on a position and a movement of the user's finger Fg.

The host controller Cnt recognizes the input operation made by the user with the virtual user interface, based on position information of the user's finger Fg and information of the virtual user interface (coordinate information or the like on the position detection plane Iv). Then, information of the input operation is transmitted to the external apparatus to be operated (the television set Tv). In other words, the host controller Cnt works as the recognizing portion. Further, in the input device Ip, the position detector A and the host controller Cnt is described as separated devices, but they may be an integrated unit, or they may share at least a common part.

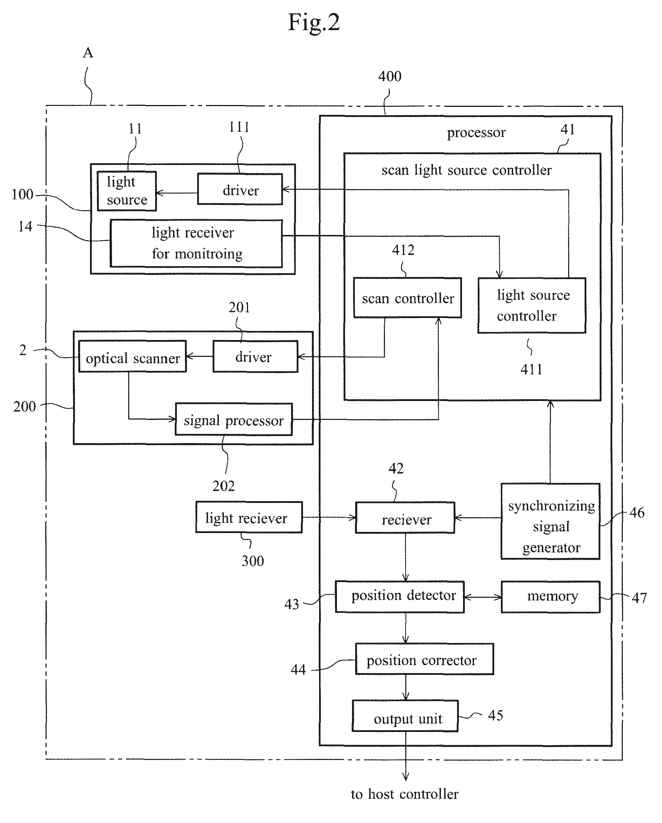

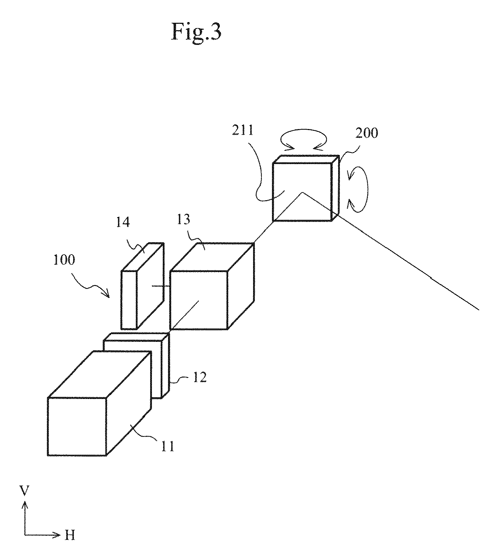

Next, the position detector is described with reference to the drawings. Fig. 2 is a block diagram of an example of the position detector, and Fig. 3 is a schematic layout diagram of a light source and an optical scanner of the position detector illustrated in Fig. 2. As illustrated in Fig. 2, the position detector A includes a light source 100, an optical scanner 200, a light receiver 300, and a processor 400.

In the position detector A, inspection light emitted from the light source 100 enters the optical scanner 200. The optical scanner 200 scans the detection area Sa with the inspection light. Further, when the user's finger Fg (object to be detected) entering the detection area Sa is irradiated with the inspection light, light reflected by the user's finger Fg (reflected light) or light scattered by the same (scattered light) is received by the light receiver 300. The light receiver 300 generates a light reception signal indicating that the reflected light or the scattered light is received, and transmits the signal to the processor 400. Further, although the reflected light and the scattered light are actually generated, light including the reflected light and the scattered light is simply referred to as reflected light in the following description. The processor 400 detects position information (coordinate information with respect to a predetermined reference point) based on the light reception signal. Details of individual portions are described below.

The light source 100 emits infrared light (a laser beam) having a wavelength in an infrared region. Because the infrared light is light having a wavelength that the user cannot see, the user does not recognize that the light is emitted. As illustrated in Figs. 2 and 3, the light source 100 includes a light source 11 using a laser light emitting element (laser diode (LD)), a driver 111, a lens 12, a beam splitter 13, and a light receiver for monitoring 14.

Although the laser light emitting element is exemplified as the light source 11, this is not a limitation. It is possible to widely adopt a structure including a light source that can output infrared light having a predetermined wavelength at a predetermined power level or higher.

The light source 100 is controlled to emit light by a light source controller 411 described later. The light source 11 is driven by a drive signal (power) from the driver 111, and the driver 111 generates the drive signal for driving the light source 11 based on a control signal (light emission signal) from the light source controller 411. In other words, the light source controller 411 adjusts light emission timing, intensity, and the like of the infrared light emitted from the light source 11.

The light source 11 is a point light source, and hence the emitted infrared light is diverging light. Therefore, in the light source 100, the infrared light emitted from the light source 11 passes through the lens 12 and is converted into a collimated light beam or a substantially collimated light beam. Here, a collimator lens can be exemplified as the lens 12, but this is not a limitation. It is possible to widely adopt an optical element that can convert diverging light into collimated light.

The light beam (infrared light) emerging from the lens 12 enters the beam splitter 13. The beam splitter 13 is optimized for the infrared light emitted from the light source 11, and it reflects a part of the entering light beam while transmits the other. The light reflected by the beam splitter 13 enters the light receiver for monitoring 14. The light receiver for monitoring 14 transmits a monitor signal based on the received light to the light source controller 411 of a scan light source controller 41.

The light beam after passing through the beam splitter 13 enters the optical scanner 200. The optical scanner 200 reflects the entering light and deflects (for scanning) an optical axis of the reflected light in a first direction (horizontal direction H in Fig. 3) and in a second direction (vertical direction V in Fig. 3) perpendicular to the first direction. The light beam deflected by the optical scanner 200 scans the detection area Sa. Details of scanning of the detection area Sa with the light beam are described later.

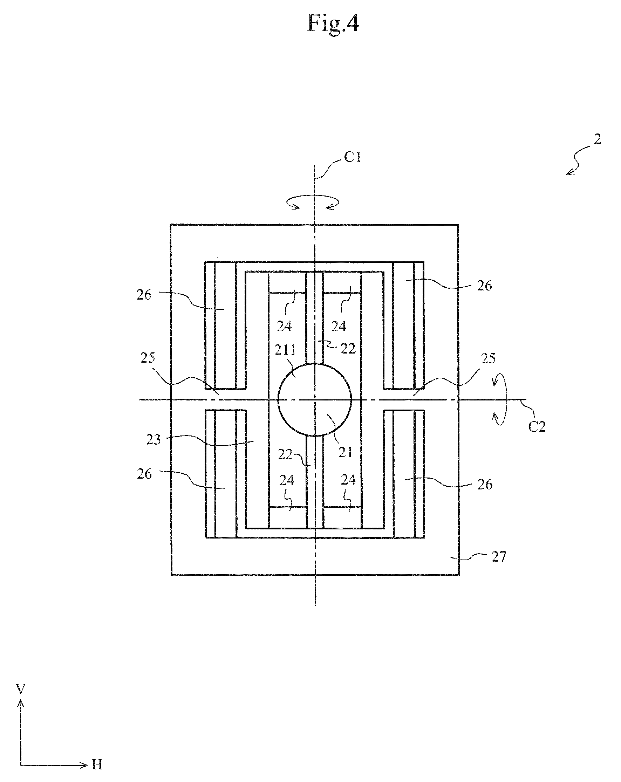

The optical scanner 200 deflects the entering light beam in the first direction (H direction) and in the second direction (V direction) by a rocking reflection surface so as to generate the inspection light. The optical scanner 200 includes an optical scanner 2, a driver 201, and a signal processor 202. The optical scanner 2 is described below with reference to the drawing. Fig. 4 is a schematic plan view of the optical scanner. The optical scanner 2 is a very small member and has a structure called a micro electro mechanical system (MEMS), for example.

As illustrated in Fig. 4, the optical scanner 2 includes a mirror body 21, a first elastic support part 22, a rocking support part 23, first actuators 24, a second elastic support part 25, second actuators 26, and a frame body 27. Further, in Fig. 4, a lateral direction is the first direction (H direction) while a vertical direction is the second direction (V direction) for description. As illustrated in Fig. 4, the optical scanner 2 has a symmetric shape with respect to a first axis C 1 extending in the second direction (V direction) and a symmetric shape with respect to a second axis C2 extending in the first direction (H direction).

The frame body 27 is a rectangular flat plate member having a rectangular opening window in a middle part. The rocking support part 23 that is a rectangular flat plate member extending in the V direction is disposed inside the opening window of the frame body 27. Middle parts in the V direction of inner walls opposed in the H direction of the opening window of the frame body 27 are connected to middle parts in the V direction of both sides in the H direction of the rocking support part 23 with a pair of the second elastic support parts 25. The second elastic support parts 25 have the same length. The rocking support part 23, the pair of second elastic support parts 25, and the frame body 27 has symmetric shapes with respect to the first axis C1 and the second axis C2.

Further, the second actuator 26 extending in the V direction is connected to a middle part in the H direction of the second elastic support part 25. The second actuators 26 extend to opposite sides in the V direction from the second elastic support part 25. The second actuator 26 is connected to the second elastic support part 25 and the frame body 27. Four of the second actuators 26 are disposed, and the four second actuators 26 are arranged to be symmetric with respect to the first axis C 1 and the second axis C2.

The second actuator 26 includes a piezoelectric element and is deformed when an electric power is supplied. The four second actuators 26 are appropriately driven so that the second elastic support parts 25 are twisted about the second axis C2. By a force due to deformations of the second actuators 26 and an elastic restoring force of the second elastic support part 25, the rocking support part 23 rocks around the second axis C2. As described later in detail, when the rocking support part 23 rocks, the mirror body 21, the first elastic support part 22, and the first actuators 24 inside the rocking support part 23 also rock as a unit.

The rocking support part 23 has an opening window in a middle part similarly to the frame body 27. The mirror body 21 is a disk-like member having a reflection surface 211 formed on one of main surfaces (here, a surface on a front side of the paper), and it is disposed inside the opening window of the rocking support part 23. Middle parts in the H direction of inner walls opposed in the V direction of the opening window of the rocking support part 23 are connected to both ends of the mirror body in the V direction with a pair of the first elastic support parts 22. The first elastic support parts 22 have the same length. The rocking support part 23, the pair of first elastic support parts 22, and the mirror body 21 have symmetric shapes with respect to the first axis Cl and the second axis C2 in a standstill state.

Further, the first actuators 24 are disposed on both ends in a longitudinal direction (V direction) of the rocking support part 23, so as to sandwich the first elastic support part 22. Four first actuators 24 are disposed so as to be symmetric with respect to the first axis C1 and the second axis C2.

The four first actuators 24 are appropriately driven so that the first elastic support parts 22 are twisted about the first axis C1, and the elastic restoring force of the first elastic support part 22 is used for rocking the mirror body 21 about the first axis C1. By adjusting the magnitude of the force from the first actuator 24 and the application timing, it is possible to adjust a rocking speed, a rocking angle, and a frequency of the mirror body 21.

The optical scanner 2 has the structure described above. When the light beam enters the reflection surface 211 of the mirror body 21 rocking about the first axis C 1 of the optical scanner 2, the light beam reflected by the reflection surface 211 is deflected in the first direction (H direction). In addition, when the light beam enters the reflection surface 211 of the mirror body 21 rocking about the second axis C2 of the optical scanner 2, the light beam reflected by the reflection surface 211 is deflected in the second direction (V direction).

Further, by appropriately driving the first actuator 24 and the second actuator 26, the reflection surface 211 of the mirror body 21 rocks about each of the first axis C1 and the second axis C2 at a predetermined period. By projecting the light beam to the reflection surface 211 of the mirror body 21 rocking about the first axis C 1 and the second axis C2, the light beam is deflected in two-dimensional directions (the H direction and the V direction) so that the inspection light is generated. Note that in the following description, a light line when the light beam scanning in the first direction (H direction) may be referred to as a scanning line.

Further, the piezoelectric optical scanner using the piezoelectric actuator is exemplified and described as the optical scanner 2, but it is possible to adopt an optical scanner using another actuator having a different structure such as an electrostatic type or a magnetic type.

In addition, the structure of the optical scanner is not limited to the structure of rocking the reflection surface 211, but may be a structure in which the optical axis of the reflected light can be deflected about two axes perpendicular to each other, such as a combination with a polygon mirror or a galvanometer mirror. As scanning directions by the inspection light, the first direction and the second direction are described as being perpendicular to each other, but this is not a limitation. It is sufficient that the first direction and the second direction are different directions. However, in order to accurately scan the detection area Sa in a two-dimensional manner by the inspection light, it is preferred that the first direction and the second direction should be perpendicular or substantially perpendicular to each other.

The optical scanner 2 of the optical scanner 200 is controlled and driven by a scan controller 412 of the scan light source controller 41 as described later. The control signal (scan signal) from the scan controller 412 is input to the driver 201.
The driver 201 generates the drive signal for driving the actuator of the optical scanner 2 based on the control signal from the scan controller 412 and drives the actuator. Then, the mirror body 21 rocks about the first axis C 1 and about the second axis C2 at a predetermined frequency and rocking angle. In addition, the signal processor 202 generates a displacement signal including displacement (rocking angle) information of the reflection surface 211 based on a sensor signal output from the optical scanner 2, and transmits the displacement signal to the scan controller 412 of the scan light source controller 41.

The light receiver 300 receives reflected light generated by the user's finger Fg crossing the inspection light in an infrared wavelength range emitted from the light source 100, and outputs the light reception signal. The light receiver 300 has a general structure, i.e., a structure including a light receiving element, a filter, and a lens (which are not shown). Description of detailed structure of the light receiver 300 is omitted because it is known.

Next, the processor 400 is described. The processor 400 controls the light source 100 and the optical scanner 200, and it also performs calculation to detect a position of the user's finger Fg within the detection area Sa based on the light reception signal from the light receiver 300.

The processor 400 has a structure including a processing circuit such as a CPU or MPU, and includes, as illustrated in Fig. 2, the scan light source controller 41, a receiver 42, a position detector 43, a position corrector 44, an external output unit 45, a synchronizing signal generator 46, and a memory 47.

The scan light source controller 41 is a controller that controls an output power of the light from the scan light source 100, a deflection range of the inspection light, a deflection speed, and the like. The scan light source controller 41 includes the light source controller 411 and the scan controller 412.

The light source controller 411 is a control circuit that controls drive of the light source 100. The light source controller 411 receives the monitor signal from the light receiver for monitoring 14. The light source controller 411 generates a control signal for controlling an output power of the light (infrared light) emitted from the light source 11, a light output timing, a light output period, and the like based on the monitor signal, and it transmits the control signal to the driver 111.

The scan controller 412 is a control circuit that controls drive of the optical scanner 200. The scan controller 412 receives the displacement signal from the signal processor 202 of the optical scanner 200. Then, the scan controller 412 generates a control signal for appropriately rocking the reflection surface 211 based on the displacement signal and transmits the control signal to the driver 201.

The light source controller 411 and the scan controller 412 drive the light source 100 and the optical scanner 200 in a synchronized manner, so as to scan the detection area Sa by the inspection light. The scan light source controller 41 can access the memory 47. The scan light source controller 41 drives the light source 100 and the optical scanner 200 based on optical scanning pattern information stored in the memory 47.

The memory 47 includes storage devices such as a ROM for read only, a RAM that can read and write, a flash memory, and the like. The memory 47 stores a control table in which the light output timing of the light source 100 and information of the rocking angle of the reflection surface 211 of the optical scanner 200 are arranged in time series. Note that the control table may include other data. Further, the optical scanning pattern information may include presence or absence of light output from the light source 100 at an arbitrary time, and the rocking angle of the reflection surface 211 (optical scanner 200).

The receiver 42 is connected to the light receiver 300, and is a circuit that obtains the light reception signal from the light receiver 300. The receiver 42 obtains a synchronizing signal for synchronizing the drive of the light source controller 411 with the drive of the scan controller 412 from the synchronizing signal generator 46, and associates the light reception signal with the synchronizing signal so as to send them to the position detector 43. Details are described later.

The position detector 43 calculates and obtains a position (such as coordinates) of the user's finger Fg from the obtained light reception signal and the synchronizing signal associated with the light reception signal. As long as the user's finger Fg is crossing the inspection light, the light receiver 300 regularly (every scan period of the inspection light) transmits the light reception signal to the receiver 42. Therefore the position detector 43 regularly obtains the position information of the user's finger Fg. Calculation of the position of the user's finger Fg is described later.

Data of the position of the user's finger Fg obtained by the position detector 43 is sent to the position corrector 44. The position corrector 44 is a calculation circuit that performs calculation for correcting the position of the user's finger. The correction calculation is described later together with position calculation.

The external output unit 45 is an external interface for connecting to the host controller Cnt so as to transmit the position information of the user's finger Fg to the host controller Cnt. The external output unit 45 may be one for connecting to the host controller Cnt by wire, or it may be one for connecting by wireless.

The synchronizing signal generator 46 includes a signal generation circuit for generating a synchronizing signal. The light source controller 411 and the scan controller 412 are driven in a synchronizing manner based on the synchronizing signal. In addition, the synchronizing signal is transmitted to the receiver 42, too. The receiver 42 associates the synchronizing signal with the light reception signal and transmits them to the position detector 43. The position detector 43 obtains the light reception signal in association with the synchronizing signal, so as to obtain information in which the light output time of the inspection light from the light source 100, start and period of the scanning by the optical scanner 200, and time of receiving the detection light by the light receiver 300 are associated with each other.

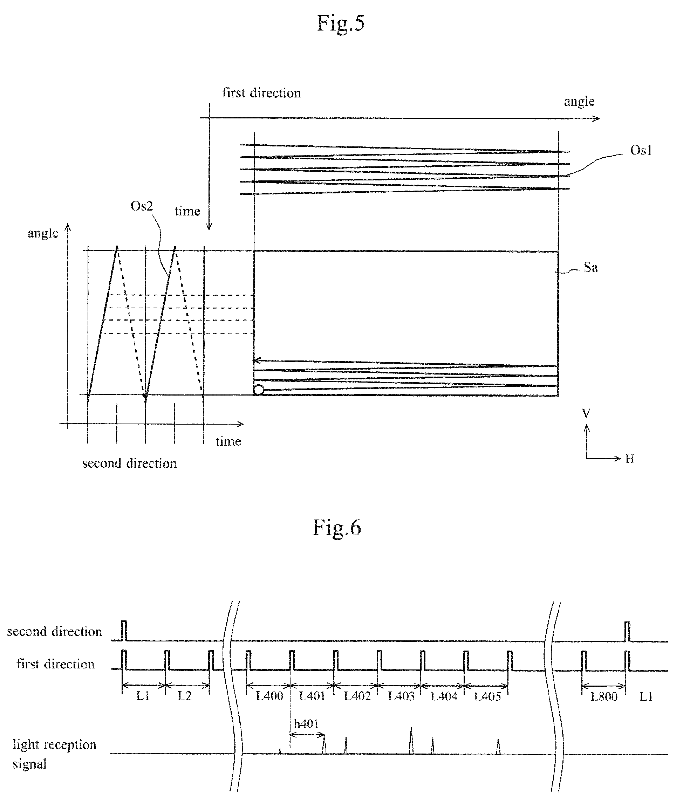

Next, an operation of the position detector A is described with reference to the drawings. Fig. 5 is a diagram illustrating an optical scanning operation of the position detector, and Fig. 6 is a diagram illustrating the scan signal sent from the scan controller to the optical scanner.

Fig. 5 illustrates an operation of the mirror body 21 of the optical scanner 200. A rectangle in Fig. 5 shows a detection area Sa viewed from the user and illustrates scanning of the detection area Sa by the inspection light (scanning line). In Fig. 5, rocking movement of the reflection surface 211 about the first axis C1 is illustrated above the rectangle indicating the detection area Sa. In addition, rocking movement about the second axis C2 is illustrated on the left side of the rectangle. Further, inside the rectangle indicating the detection area Sa, there is shown a scan state of the detection area Sa by the inspection light when the rocking about the first axis C1 and the rocking about the second axis C2 are performed in combination. Thus, the optical scanner 200 scans (raster scans) the detection area Sa by arranging the scanning lines without a gap.

In Fig. 5, as to rocking Os1 about the first axis C1, the horizontal axis represents the rocking angle (position of the normal) of the reflection surface 211 (mirror body 21), while the vertical axis represents time. In addition, as to rocking Os2 about the second axis C2, the horizontal axis represents time, while the vertical axis represents the rocking angle (position of the normal) of the reflection surface 211 (mirror body 21). The position detector A drives the light source 100 and the optical scanner 200 based on the control signal generated by the light source controller 411 and the control signal of the scan controller 412. The reflection surface 211 rocks about the first axis C 1 at a constant frequency and rocks about the second axis C2 at a constant frequency. The light beam is projected to the reflection surface 211 rocking in this way, and hence the light beam is deflected in the first direction (H direction) and in the second direction (V direction).

The optical scanner 200 deflects the light beam in the first direction and in the second direction. In this way, the detection area Sa is raster scanned. This scanning with the inspection light is performed by the rocking about the first axis C 1 and the rocking about the second axis C2 of the mirror body 21. As illustrated in Fig. 5, a frequency of the rocking about the first axis C1 is higher than a frequency of the rocking about the second axis C2. For example, the rocking frequency in the first direction is 24 kHz, and the rocking frequency in the second direction is 30 Hz.

In order to rock the mirror body 21 at these frequencies, the scan controller 412 drives the optical scanner 2 with the scan signal as illustrated in Fig. 6. The upper signal in Fig. 6 is the scan signal for controlling the rocking about the second axis C2 (second direction), and the middle signal is the scan signal for controlling the rocking about the first axis C1 (first direction). In addition, the lower signal is the light reception signal from the light receiver 300 when the user's finger enters the detection area.

As illustrated in Fig. 6, the scan signal is a signal for the actuator to output a drive force every constant period. First, the scan signal for controlling the rocking about the first axis C1 is described. As illustrated in the middle signal in Fig. 6, the rocking period of the mirror body 21 is denoted by a combination of capital letter "L" and a numeral. This period denoted by a combination of capital letter "L" and a numeral is the single rocking period about the first axis C1. Note that the numeral after "L" represents an order of a period forming a scanning line when scanning the detection area Sa. For example, L1 represents a period when scanning a first scanning line, and indicates that it is a period for forming the uppermost or lowermost scanning line in the detection area Sa. In addition, L400 indicates to be a period for forming a 400th scanning line from L1. Further, the optical scanner 200 has a structure for scanning the detection area Sa by 800 scanning lines, and hence the last period is denoted by L800. Note that it can be said that the numeral after "L" indicates a position of the scanning line in the detection area Sa.

As illustrated in Fig. 6, the scan controller 412 transmits the scan signal driver 201 so that the actuator 24 outputs the drive force at the first timing in each period. In this way, resonance drive is performed, in which the drive force output from the actuator 24 is synchronized with the natural frequency of the optical scanner 2 so that resonance is generated for the rocking. In other words, the vibration by the actuator 24 causes resonance, and hence the mirror body 21 can rock largely and fast (at a high frequency).

Further, the light beam from the light source 100 is emitted in synchronization with the rocking period. For example, if the light beam is continuously emitted from the light source 100 in the example illustrated in Fig. 5, the inspection light from the optical scanner 200 runs over the detection area Sa at both end portions at which the mirror body 21 has the largest rocking angle. In the state where the mirror body 21 is being rocked, the timing of the light beam emitted from the light source 100 is adjusted, and hence the inspection light (scanning line) can scan only within the detection area Sa.

It can be said that the rocking about the second axis C2 is shifted in the second direction (the vertical direction in Fig. 5) every one scanning in the first direction of the light beam. Further, by rocking about the second axis C2, the scanning line fills the detection area Sa so that the raster-scan is performed. In other words, the rocking about the second axis C2 is performed once per 800 times of rocking about the first axis C1. Therefore the scan signal instructing the rocking about the second axis C2 has a period of one scan corresponding to the periods from L1 to L800 as illustrated in Fig. 6.

The rocking about the second axis C2 is driven by the actuator 26 that also utilizes resonance in the same manner as the rocking about the first axis C1. However, the rocking about the second axis C2 has the lower frequency than the rocking about the first axis C 1. Therefore, the rocking about the second axis C2 may be driven by non-resonance drive (DC drive) so that the predetermined angle is directly obtained by the drive force from the actuator 26.

Further, every time when the 800 scans in the first direction are finished while one scan in the second direction is finished, an initial position is restored, and the scanning of the detection area Sa is restarted. The period from start of forming the first scanning line (here, L1) to end of forming the last scanning line (here, L800) is the one scanning period. In other words, in one scanning period, the light beam is deflected 800 times in the first direction and one time in the second direction.

The detection operation of a position of the user's finger Fg in the detection area by the position detector A is described below with reference to the drawings. The position detector A detects a position of the user's finger Fg in the detection area Sa in front of the user. The detection area Sa is a rectangular parallelepiped area extending in a vertical direction (referred to as a y-direction), a lateral direction (referred to as an x-direction), and a depth direction (referred to as a z-direction) viewed from the user. Further, the position detection plane Iv extending in the x-direction and in the y-direction is set inside the detection area Sa. Note that the position detection plane Iv is a plane assumed inside the detection area Sa and is a plane to be a reference when operating the virtual user interface described later.

The optical scanner 200 arranges the scanning lines, which are formed by the light beam scanning the detection area Sa in the x-direction, in the y-direction, so that the detection area Sa is scanned. In other words, the first direction is the x-direction, and the second direction is the y-direction. The position detector A scans the detection area Sa with the inspection light. The inspection light reflected by the user's finger Fg entering the detection area Sa is received by the light receiver 300. The light receiver 300 is disposed so as to receive light only from the detection area Sa. In other words, a light receivable range of the light receiver 300 is the detection area Sa. By changing a position of the light receiver 300 and the light receivable range, the detection area Sa is changed. In this embodiment, it has the rectangular parallelepiped shape having a rectangular surface opposed to the user and a thickness in the depth direction viewed from the user, as described above. However, this is not a limitation. By changing the light receiver 300, it is possible to form the detection area Sa having a square or circular surface opposed to the user.

The scanning line is a line of the inspection light beam scanning in the first direction. When the user's finger Fg crosses the scanning line, the inspection light is reflected by the user's finger Fg so that the reflected light is generated. In the following description, when the user's finger Fg crosses the scanning line, it is supposed that the reflected light from the user's finger Fg is generated. In addition, a position of the user's finger Fg in the x-direction, the y-direction, and the z-direction means an x-direction position, a y-direction position, and a z-direction position of the tip of the user's finger Fg, unless otherwise noted.

When receiving the reflected light, the light receiver 300 sends the light reception signal to the receiver 42 of the processor 400. The receiver 42 has obtained the synchronizing signal synchronized with the scanning in the first direction and in the second direction by the mirror body 21, and associates the light reception signal with the synchronizing signal so as to transmit them to the position detector 43.

The position detector 43 specifies the scanning period and the number of the scanning line when receiving the light reception signal, based on the light reception signal and the synchronizing signal. Further, in the following description, when describing that the processor 400 has obtained the scanning period and information of the scanning line, it is supposed that it has obtained after performing the above-mentioned process. In addition, in this description, the scanning period is distinguished in time series by the time representing the period (a start time, a middle time, or an end time of the scanning).

The light reception signal generated by the light receiver 300 that receives the reflected light when the user's finger Fg crosses the scanning line in the detection area Sa is a pulse-like signal as illustrated in Fig. 6. This is because the scanning line is a line of the inspection light deflected in the x-direction, and the time period while the user's finger Fg is irradiated with the inspection light is very short. Because the scanning by the inspection light is synchronized with the rocking of the mirror body 21, the position detector 43 specifies the scanning period when the light reception signal is received and the scanning line that the user's finger Fg has crossed, based on the light reception signal and the synchronizing signal. In addition, the position detector 43 specifies the position in the period of forming the scanning line at the time when the light reception signal is received. The position detector 43 specifies a position in the y-direction in the detection area Sa from information (the number) of the scanning line that the user's finger Fg has crossed and an angle and a frequency of the rocking of the mirror body 21 about the second axis C2. In addition, the position detector 43 specifies a position of the user's finger Fg in the x-direction from the position in the period of the crossed scanning line and an angle and a frequency of the rocking of the mirror body 21 about the first axis C 1.

For example, the light reception signal is detected when a time h401 elapses from start of a scanning period L401 as illustrated in Fig. 6. From this fact, the position detector 43 obtains this information from the light reception signal and the synchronizing signal, and knows that the user's finger Fg has crossed the scanning line L401 at the position in the x-direction corresponding to the time h401 moving from the start position of the scanning period L401. Then, the position detector 43 detects the position of the scanning line L401 in the y-direction from an angle and a speed of the rocking of the mirror body 21, and it specifies the position in the x-direction by specifying the scanning position of the inspection light at the time point when time h401 elapses from the start position of the scanning period L401.

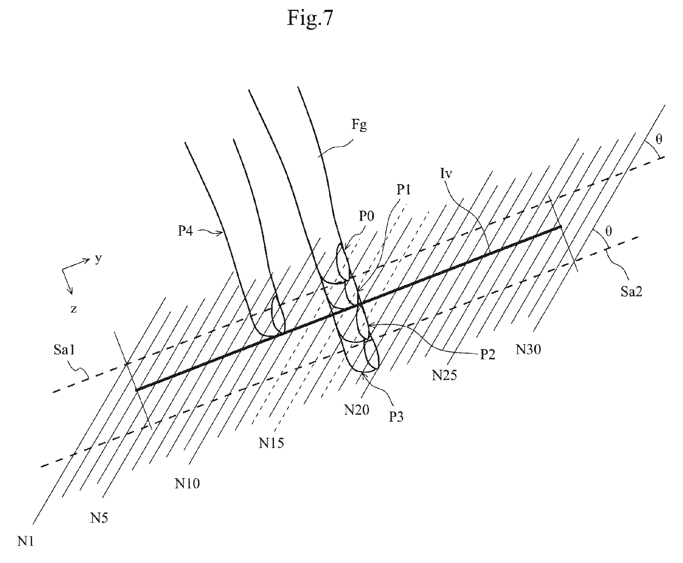

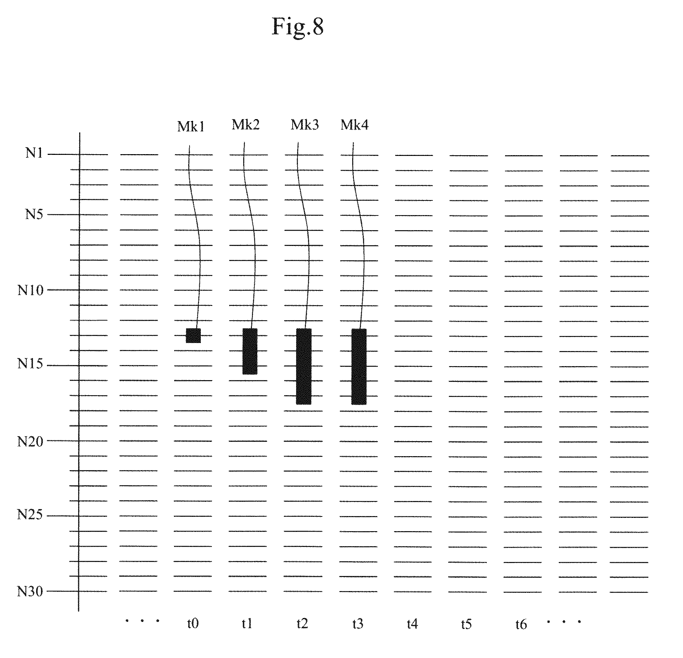

Next, detection of a position in the z-direction is described below with reference to the drawings. Fig. 7 is a diagram illustrating a state where the detection area is being scanned with the inspection light, and Fig. 8 is a diagram illustrating a state of receiving the light reflected by the user's finger. Fig. 7 is a diagram of the detection area Sa viewed from the side, and it illustrates a scan state of the detection area Sa scanned by the inspection light and sequentially illustrates the user's finger Fg entering the detection area Sa in time series. Note that in Fig. 7, a boundary plane of the detection area Sa on the user side is referred to as a first boundary plane Sa1, and a boundary plane on the opposite side to the user is referred to as a second boundary plane Sa2.

As illustrated in Fig. 7, the position detection plane Iv is disposed at a substantially middle part of the detection area Sa in the depth direction (z-direction). Further, the optical scanner 200 scans with the inspection light the entire region in which the position detection plane Iv of the detection area Sa is projected in the depth direction (z-direction). As illustrated in Fig. 7, the inspection light scanning the detection area Sa is inclined by irradiation angle θ with respect to the first boundary plane Sa1 (second boundary plane Sa2) of the detection area Sa. This irradiation angle θ of the inspection light is described later.

In Fig. 7, the detection area Sa is scanned with 30 scanning lines for convenience of description, but actually it is scanned with more scanning lines (for example, 800 scanning lines as illustrated in Fig. 6). Note that a combination of the capital letter "N" and a numeral represents the scanning line in the same manner as the combination of the capital letter "L" and a numeral illustrated in Fig. 6. In other words, 30 scanning lines are described as N1 to N30.

In Fig. 7, it is supposed that the tip of the user's finger Fg moves to a position P0 reaching the first boundary plane Sa1 from the outside of the detection area Sa, a position P1 contacting with the position detection plane Iv, a position P2 reaching the second boundary plane Sa2, and a position P3 protruding from the second boundary plane Sa2.

Fig. 8 illustrates light received by the light receiver 300 every scanning of the 30 scanning lines. Further, each of the 30 scanning lines is illustrated in the vertical direction, and scanning sets of all 30 scanning lines are arranged in time series for each scanning period in the lateral direction. Here, the scanning periods are represented by times t0 to t6, which indicate not time points but positions in time series in one scanning period of the detection area Sa. Further, in Fig. 8, among the inspection light scanning at the times t0 to t6, the light reflected by the user's finger Fg and received by the light receiver 300 is illustrated by filling the corresponding inspection light.

When the user's finger Fg is at a position apart more from the detection area Sa than P0, the user's finger Fg may cross the scanning line, but the part crossing the scanning line is outside the detection area Sa. Therefore the light receiver 300 does not receive the reflected light. Accordingly, when the light reception signal is not obtained, the processor 400 determines that the user's finger Fg is outside the detection area Sa.

As illustrated in Fig. 7, when the user's finger Fg is at the position P0, the user's finger Fg is crossing the scanning line on the nearer side (of a smaller number) than the scanning line N13. When the user's finger Fg is at the position P0, it is in a contact state with the first boundary plane Sa1, and only the reflected light when the user's finger Fg crosses the scanning line N13 is received by the light receiver 300. When receiving the reflected light, the light receiver 300 transmits the light reception signal to the processor 400.

The processor 400 checks which one of the scanning periods (t0 to t6) is the current period based on reception of the light reception signal and specifies the scanning line (N13) that the user's finger Fg has crossed based on information of the above-mentioned period. If the scanning period when the user's finger Fg is at the position P0 is the time t0, the processor 400 determines that the user's finger Fg has crossed the scanning line N13 of the scanning period at the time t0. This is schematically illustrated in Fig. 8. In Fig. 8, there is shown a mark Mk1 indicating that the user's finger Fg is detected on the scanning line N13 at the time t0.

As shown in Fig. 7, positions in the y-direction of the parts of the scanning lines crossing the first boundary plane Sa1 are independent of each other. Therefore the processor 400 specifies the position of the contact point between the user's finger Fg and the first boundary plane Sa1 in the y-direction on the first boundary plane Sa1 based on the scanning line that the user's finger Fg has crossed when it has contacted with the first boundary plane Sa1.

Further, when the user's finger Fg crosses a plurality of scanning lines in the detection area Sa, the part of the user's finger Fg closest to the first boundary plane Sa1 crosses the nearest scanning line. Therefore, if it is determined that the user's finger Fg has crossed a plurality of scanning lines when the first light reception signal is received, the processor 400 determines the position of the contact point between the user's finger Fg and the first boundary plane Sa1 in the y-direction on the first boundary plane Sa1, based on the nearest scanning line.

After that, if the user's finger Fg moves from the position P0 (t0) to the position P1 (t1), the user's finger Fg crosses the scanning line on the nearer side than the scanning line N15. In Fig. 8, there is shown a mark Mk2 indicating that the user's finger Fg is detected on the scanning lines N13, N14, and N15 in the scanning period at the time t1. The light receiver 300 receives the reflected light when the user's finger Fg crosses the scanning lines N13, N14, and N15, and sends the light reception signal to the processor 400.

The processor 400 determines that the user's finger Fg has crossed the scanning lines N13, N14, and N15 in the scanning period at the time t1. Because the user's finger Fg has crossed the scanning lines N13, N14, and N15, the processor 400 can specify a position of the tip of the user's finger Fg in the z-direction. In other words, the processor 400 determines that the user's finger Fg has entered from the first boundary plane Sa1 in the z-direction by an amount corresponding to two scanning lines. In this way, the processor 400 detects the position of the user's finger Fg entering the detection area Sa in the z-direction from the first boundary plane Sa1.

Further, if the user's finger Fg moves from the position P1 (t1) to the position P2 (t2), the user's finger Fg crosses the scanning line on the nearer side than the scanning line N17. In Fig. 8, there is shown a mark Mk3 indicating that the user's finger Fg is detected on the scanning lines N13 to N17 in the scanning at the time t2. Further, the light receiver 300 receives the reflected light when the user's finger Fg crosses the scanning lines N13 to N17, and sends the light reception signal to the processor 400.

The processor 400 determines that the user's finger Fg has crossed the scanning lines N13 to N17 in the scanning period at the time t2. Because the user's finger Fg has crossed the scanning lines N13 to N17, the processor 400 can specify the position of the tip of the user's finger Fg in the z-direction. In other words, the processor 400 determines that the user's finger Fg has entered from the first boundary plane Sa1 in the z-direction by an amount corresponding to four scanning lines.

Then, if the user's finger Fg moves from the position P2 (t2) to the position P3 (t3), the user's finger Fg crosses the scanning line on the nearer side than the scanning line N19. The tip of the user's finger Fg is protruded from the second boundary plane Sa2 and has crossed the scanning lines N13 to N17 in the detection area Sa (see Fig. 7). The points where the user's finger Fg crosses N18 and N19 are outside the detection area Sa. Therefore, in Fig. 8, there is shown a mark Mk4 indicating that the user's finger Fg is detected on the scanning lines N13 to N17 in the scanning at the time t3. The light receiver 300 receives the reflected light when the user's finger Fg crosses the scanning lines N13 to N17, and sends the light reception signal to the processor 400.

The scanning lines that the user's finger Fg crosses are not changed from those at the previous time t2. From this fact, the processor 400 determines that the tip of the user's finger Fg has moved from the second boundary plane Sa2 to the outside of the detection area Sa.

The position detector A specifies a position of the user's finger Fg in the z-direction based on the number of scanning lines that the user's finger Fg crosses. Further, as the number of the scanning lines arranged in the z-direction is greater (as the resolution is higher), the detection accuracy of the position in the z-direction can be higher. Therefore the position detector A set a smaller irradiation angle θ of the inspection light with respect to the first boundary plane Sa1 and the second boundary plane Sa2 in the detection area Sa, so as to arrange more scanning lines in the z-direction. In other words, the resolution is improved. Further, the irradiation angle θ has an optimal value depending on a beam diameter of the light beam and the rocking frequency of the optical scanner 200 in most cases, and it is preferred to set the irradiation angle θ to be or be close to the optimal value.

As described above, because the inspection light has the constant irradiation angle 0, the number of the scanning lines arranged in the z-direction between the first boundary plane Sa1 and the position detection plane Iv in the detection area Sa is constant (here, three). Therefore the processor 400 determines that the tip of the user's finger Fg has reached the position detection plane Iv based on the light reception signal from the light receiver 300, if the user's finger Fg has crossed three scanning lines.

For example, the user's finger Fg may be at the position P4 moved in the y-direction from the position P1 toward the scanning line N1. In this case, the user's finger Fg crosses the scanning line on the nearer side than the scanning line N11, and the scanning lines included in the detection area Sa are three scanning lines N9, N10, and N11. Therefore the processor 400 determines that the position of the tip of the user's finger Fg in the z-direction at the position P4 is the same as that at the position P1 based on the light reception signal. Further, because the nearest scanning line in the detection area Sa that the user's finger Fg crosses is N9, it is determined that the user's finger Fg is at a position shifted from the position P1 toward N1 in the y-direction by an amount corresponding to four scanning lines.

As described above, in the position detector A, the processor 400 specifies the scanning lines that the user's finger Fg has crossed, based on the light reception signal from the light receiver 300, and detects the positions of the user's finger Fg in the x-direction, in the y-direction, and in the z-direction within the detection area Sa from information of the scanning lines. Note that the position in the x-direction, the position in the y-direction, and the position in the z-direction are positions specified by (x, y, z) coordinates in the detection area Sa, for example, but this is not a limitation.

As described above, the position detector A detects the position of the user's finger Fg in the detection area Sa every scanning period (for example, at times t0 to t6). The position detector 43 can obtain information of a movement (locus) of the user's finger Fg based on the position coordinates (x, y, z) of the user's finger Fg detected at each scanning period. Further, the position detector 43 determines the movement of the user's finger Fg in the detection area Sa based on information of the movement.

For example, when moving from the position P0 (t0) to the position P1 (t1) illustrated in Fig. 7, the number of scanning lines that the user's finger Fg crosses is changed from one to three. In other words, when the user's finger Fg moves deeper in the depth direction (z-direction), the scanning period changes so that the number of the scanning lines that the user's finger Fg crosses is increased. The number of the scanning lines that the user's finger Fg crosses in each scanning period is increased, the position detector 43 determines that the user's finger Fg has entered deeper in the z-direction inside the detection area Sa. On the contrary, if the number of the scanning lines that the user's finger Fg crosses is decreased, the position detector 43 determines that the user's finger Fg is moving in a pulling out direction in the z-direction within the detection area Sa.

In addition, if the user's finger Fg is stopped at the position P1 (t1) overlapping with the position detection plane Iv, the scanning lines that the user's finger Fg crosses are the three scanning lines N13, N14, and N15 even if the scanning period changes (even if the scanning is repeated a plurality of times). When the number of the scanning lines that the user's finger Fg crosses does not change even if the scanning period changes (even if the scanning is repeated a plurality of times), the position detector 43 determines that the user's finger Fg is stopped.

Note that when the user's finger Fg is stopped without being supported in the detection area Sa, the user's finger Fg may shake so that the number of the scanning lines that the user's finger Fg crosses may be changed. This change of the number of the scanning lines that the user's finger Fg crosses due to shake of the user's finger Fg is small in most cases. Therefore the position detector 43 may determine that the user's finger is stopped if the changed number when the scanning period changes (when the scanning is repeated a plurality of times) is a predetermined value (threshold value) or smaller.

In addition, because the position coordinates (x, y, z) of the finger Fg in each period are detected, it is also possible to obtain a movement speed of the finger Fg. Because the position detector 43 detects the stop of the user's finger Fg based on a change of the information of the scanning lines every period, it can be said that the position detector 43 determines the stop when the movement speed of the user's finger Fg becomes a predetermined value or lower.

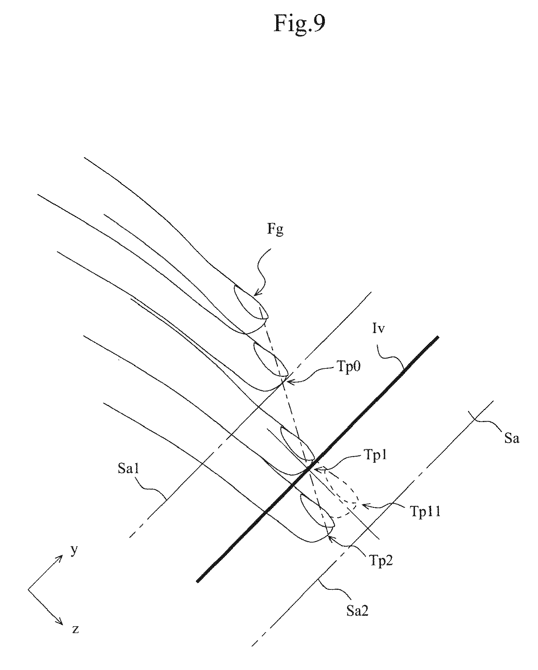

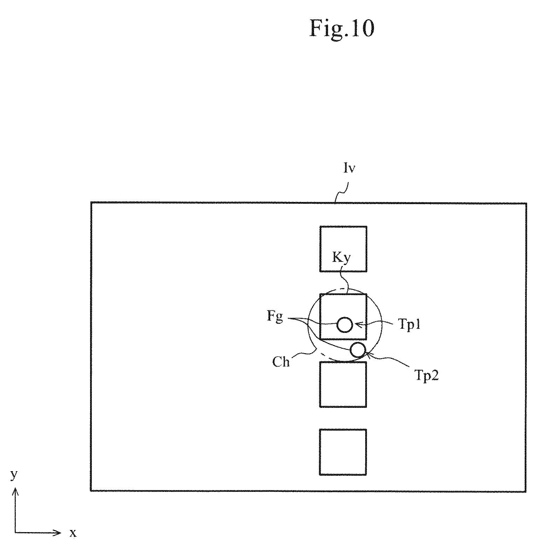

The case where the virtual user interface is operated is described below with reference to the drawings. Fig. 9 is a diagram illustrating the user's finger in the state where the virtual user interface displayed on the position detection plane is operated, and Fig. 10 is a diagram illustrating coordinates of the user's finger tip in the coordinate system of the position detection plane. Note that the coordinate system of the position detection plane Iv is an x coordinate and a y coordinate of the intersection between the position detection plane Iv and the normal of the position detection plane Iv formed from the coordinates (x, y, z) in the detection area Sa.

The input device Ip detects the user's finger Fg (pointer) inside the detection area Sa so as to recognize the input operation to the virtual user interface. Here, it is supposed that the virtual key board is displayed on the position detection plane Iv viewed from the user, and the user presses a key on the key board in the z-direction. In addition, it is supposed that the position detection plane Iv is parallel to the first boundary plane Sa1 and the second boundary plane Sa2, and is disposed in substantially the middle of the detection area Sa.

In a case of a normal key board including mechanically working keys, the user recognizes that the finger contacts with a key. Further, when pressing the key, the key operates a physical switch so that the input operation is performed. In this case, the pressing operation (movement) of the user's finger is restricted by the key.

On the other hand, when operating the virtual key board, no real key exist there, but only images of keys are visually recognized. Accordingly, the user moves his or her finger Fg so as to operate the place where the key seems to exist. The processor 400 detects a position (movement) of the user's finger Fg based on numbers and the number of the scanning lines that the user's finger Fg has crossed. Then, the processor 400 detects the movement (locus) of the user's finger Fg in the detection area Sa based on a change of the scanning lines that the user's finger Fg crosses when the scanning is repeated.

The position detector A recognizes that the user's finger Fg has contacted with the virtual key board when detecting that the user's finger Fg entering the detection area Sa contacts with the position detection plane Iv. The processor 400 determines that the user's finger Fg is in a state not operating the virtual key board when the user's finger Fg is in a state not contacting with the position detection plane Iv. Further, after the user's finger Fg contacts with the position detection plane Iv, the position detector 43 detects the position information (coordinate information) of the user's finger on the position detection plane Iv based on the position information (coordinate information) of the user's finger Fg in the detection area Sa. The processor 400 recognizes an input operation to the virtual key board by the user's finger Fg based on information of the virtual key board formed on the position detection plane Iv (for example, position information of each key on the position detection plane Iv) and position information of the user's finger Fg on the position detection plane Iv.

For example, there is described the case shown in Fig. 10, in which a key Ky displayed at a position Tp1 (x1, y1, z1) on the virtual key board displayed on the position detection plane Iv is pressed and input.

The user accurately recognizes a position (on an xy plane) of the key Ky displayed on the position detection plane Iv in many cases, and the user accurately contacts with the place where the key Ky to be operated is displayed on the position detection plane Iv with the user's finger Fg in many cases. On the other hand, because there is no sense of touch with the virtual key board, it is difficult for the user to recognize a position in the depth direction (z-direction). As a result, after contacting with the position detection plane Iv, the user's finger Fg will further move in the z-direction before stopping in many cases.

The tip of the user's finger Fg overlaps the position detection plane Iv at the position Tp1. It is supposed that the user's finger Fg moves in the z-direction from the position Tp1 to a position Tp1 (x1, y1, z2). In this case, a position of the user's finger Fg on the position detection plane Iv is a point at which the normal overlaps the position detection plane Iv, and hence it is (x1, y1, z1). In other words, when the user's finger Fg accurately moves in the z-direction, coordinates of the user's finger Fg on the position detection plane Iv do not change even if a stop position of the tip of the user's finger Fg varies. Accordingly, even if a position of the tip of the user's finger Fg in the z-direction varies in some degree, it is possible to accurately operate the virtual key board.

However, although the user intends to move the finger Fg in the z-direction, the finger Fg may actually move in a direction different from the z-direction. For example, as illustrated in Fig. 10, it is supposed that the user's finger Fg contacts with the position detection plane Iv at the position Tp1 and then stops at a position Tp2 (x2, y2, z2). In the case stopping at the position Tp2 (x2, y2, z2), a position on the position detection plane Iv of the user's finger Fg when it stops at the position Tp2 is as shown in Fig. 10 and may be shifted from the key Ky.

Therefore, the position corrector 44 detects position information (coordinate information) of the user's finger Fg from the position detector 43, and corrects from the position information a position shift on the position detection plane Iv due to the deviation of the user's finger Fg from the z-direction. A position correction method by the position corrector 44 is described below. As shown in Fig. 9, the user's finger Fg moves from a position Tp0 (entering the detection area Sa) toward the position detection plane Iv, and reaches the position Tp2 (x2, y2, z2) via the position Tp1 (x1, y1, z1) crossing the position detection plane Iv.

As described above, the position detector 43 detects coordinates at which the user's finger Fg contacts with the position detection plane Iv, i.e., coordinates of the position Tp1 based on information (numbers and the number) of the scanning lines that the user crosses. Then, the position detector 43 transmits the position information (coordinates) of the user's finger Fg detected in each scanning period to the position corrector 44. Further, the position detector 43 detects the stop of the movement of the user's finger Fg in the z-direction from a change in the number of the crossed scanning lines. In other words, when the position detector 43 determines that the movement of the user's finger Fg in the z-direction stops, it transmits the coordinates of the position (position Tp2) to the position corrector 44.

The position corrector 44 regards a locus of the user's finger Fg from the position Tp1 to the position Tp2 as a straight line, and corrects the position (coordinates) on the position detection plane Iv when the user's finger Fg is deviated from the position detection plane Iv in the z-direction. The correction equations of the user's finger Fg on the position detection plane Iv in the x-direction and in the y-direction are expressed by fx(x, z) and fy(y, z) as below using correction coefficients Cx and Cy:

$$fx(x, z) = x-(z-z1) \times Cx,$$

and

$$fy(y, z) = y-(z-z1) \times Cy,$$

where,

$$Cx = (x2-x1)/(z2-z1),$$

and

$$Cy = (y2-y1)/(z2-z1).$$

Using these calculation equations, the position correction in the x-direction and in the y-direction accompanying to a shift of the user's finger Fg in the z-direction is performed. The fx(x, z) and fy(y, z) are equations for calculating correction values, and the position corrector 44 uses the correction values calculated by the correction equations so as to correct the coordinates of the user's finger Fg. Note that a shift between the position Tp1 and the position Tp2 may be small. In this case, it is possible to determine the correction coefficients Cx and Cy based on the coordinates in another scanning period (for example, the position Tp0 at which the user's finger Fg enters the detection area Sa as illustrated in Fig. 9). In addition, as described later in detail, the correction coefficients Cx and Cy are used until the user's finger Fg is pulled out from the detection area Sa.

As described above, the position detector 43 corrects the position of the user's finger Fg in the position detection plane Iv due to a variation of the user's finger Fg in the z-direction. Then, a position shift of the user's finger Fg in the position detection plane Iv is corrected, and position information after the correction is transmitted to the host controller Cnt. The host controller Cnt recognizes the input operation based on information of the virtual user interface displayed on the position detection plane Iv (such as a key arrangement and coordinates) and the corrected position of the user's finger Iv on the position detection plane Iv.

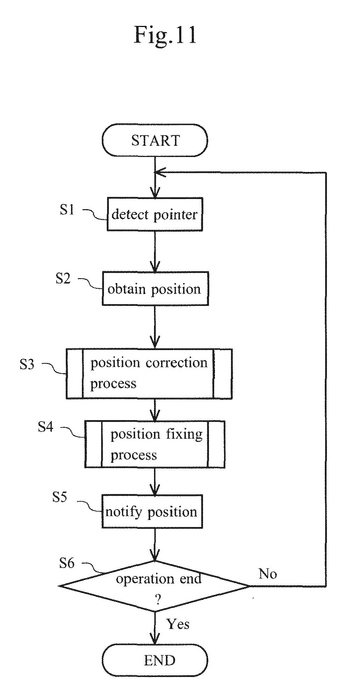

A procedure of the input operation to the virtual user interface with the input device according to the present invention is described below. Fig. 11 is a flowchart of the input operation using the input device according to the present invention.

As described above, when the user's finger Fg crosses the scanning lines in the detection area Sa, the light receiver 300 receives the reflected light so as to generate the light reception signal, and transmits the light reception signal to the processor 400. When the light reception signal is received, the receiver 42 of the processor 400 detects that the user's finger Fg (pointer) has entered the detection area Sa (Step S1). The receiver 42 associates the light reception signal with the synchronizing signal and transmits them to the position detector 43.

The position detector 43 obtains the information (numbers and the number) of the scanning lines that the user's finger Fg crosses every time when the detection area Sa is scanned by the inspection light, based on the light reception signal and the synchronizing signal. Then, the position detector 43 detects a position of the user's finger Fg in the detection area Sa (Step S2).

As described above, when the position detector 43 confirms that the movement of the user's finger Fg has stopped, the position of the user's finger Fg on the position detection plane Iv is corrected based on the position of the user's finger Fg (Step S3). Calculation of the position correction is as described above. Then, a position fixing process is performed to fix the position of the user's finger Fg on the position detection plane Iv (Step S4). Details of the position fixing process are described later.

Further, the processor 400 notifies the host controller Cnt about information (coordinates) of the fixed position of the user's finger Fg on the position detection plane Iv via the external output unit 45 (Step S5). The host controller Cnt recognizes the input operation by the user based on information of the position of the user's finger Fg on the position detection plane Iv and information of the virtual user interface displayed on the position detection plane Iv. For example, in a case of an input operation with the virtual key board, an input to the virtual key board by the user's finger Fg is recognized based on information of the virtual key board (a key arrangement and coordinates of each key on the position detection plane Iv).

Then, the host controller Cnt checks whether or not to finish the input operation using the virtual user interface (Step S6). If the input operation is not to be finished (No in Step S6), the process returns to pointer detection (Step S1). In addition, if the input operation using the virtual user interface is to be finished (Yes in Step S6), the process is finished. Note that cases to finish the input operation include a case where a key input for confirming user's intention such as decision or stop (cancel) is made, a case where a predetermined input is completed, and a case where the user's finger Fg is detected to have departed from the position detection plane Iv. However, these cases are not limitations.

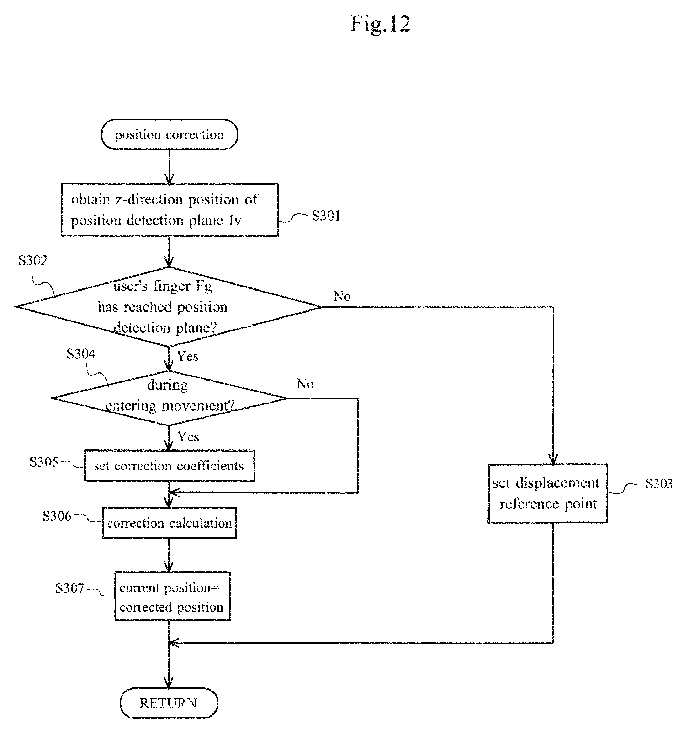

Next, details of the position correction process (Step S3) are described with reference to the drawings. Fig. 12 is a flowchart of the correction process of the position of the user's finger. As shown in Fig. 12, the position detector 43 detects the position in the z-direction where the virtual key board is displayed in the detection area Sa of the position detection plane Iv (Step S301). Here, a depth in the z-direction of the position detection plane Iv is a z-direction distance from the first boundary plane Sa1 to the position detection plane Iv. Note that in this embodiment, an entering depth and a reached depth of the tip of the user's finger Fg can be determined based on the number of the scanning lines that the user's finger Fg crosses. Therefore the position detector 43 obtains the number of scanning lines arranged in the z-direction between the first boundary plane Sa1 and the position detection plane Iv (three in Fig. 7).

The position detector 43 detects the information of the scanning lines that the user's finger Fg crosses in each scanning period, and checks whether or not the user's finger Fg has reached the position detection plane Iv based on the information (numbers and the number) of the scanning lines that the user's finger Fg crosses (Step S302). Note that the position detector 43 compares the number of the scanning lines that the user's finger Fg crosses with the number of the scanning lines arranged between the first boundary plane Sa1 and the position detection plane Iv so as to determine whether or not the user's finger Fg has reached the position detection plane Iv. Note that the position detector 43 transmits the position of the tip of the user's finger Fg to the position corrector 44 regardless that the user's finger Fg has reached the position detection plane Iv or not.

If the position detector 43 determines that the user's finger Fg has not reached the position detection plane Iv (No in Step S302), the position corrector 44 regards the current position of the tip of the user's finger Fg as a displacement reference point (Step S303). Note that the displacement reference point is a reference point for corrections in the x-direction and in the y-direction when the user's finger Fg moves in the z-direction beyond the position detection plane Iv. For example, it is a point at which the user's finger Fg first overlaps the position detection plane Iv, and after the user's finger Fg moves in the z-direction beyond the position detection plane Iv, it is the same as the position Tp1 illustrated in Fig. 10.

Because the user's finger Fg does not exceed the position detection plane Iv so that the user's finger Fg is not at the stage to operate the virtual key board, the position corrector 44 does not correct the position of the user's finger Fg on the position detection plane Iv, and returns to the position fixing process of the main process (Step S4). Note that the displacement reference point is updated in Step S303 until the tip of the user's finger Fg reaches the position detection plane Iv.

In addition, if the user's finger Fg has moved in the z-direction beyond the position detection plane Iv (Yes in Step S302), the position detector 43 checks whether or not the user's finger Fg is entering in the z-direction (Step S304). As described above, the position detector 43 determines whether or not the user's finger Fg is moving in the z-direction, in other words, whether or not it is stopped, based on a change of the number of the scanning lines that the user's finger Fg crosses, which is detected every repetition of the scanning.

If the user's finger Fg is in the entering movement (i.e., the user's finger Fg is not stopped; Yes in Step S304), the correction coefficient Cx in the x-direction and the correction coefficient Cy in the y-direction are set based on the current position information of the user's finger Fg and the position information of the displacement reference point (Step S305). Note that in the above equation for the correction calculation, the displacement reference point is the position Tp1, and the current position is the position Tp2. Then, using the above equation, the correction coefficients Cx and Cy are calculated from the coordinates at that time, and the calculated values are stored in the memory 47. The position corrector 44 repeats the calculation of the correction coefficients Cx and Cy until the movement of the user's finger Fg stops. Note that the correction coefficients Cx and Cy are overwritten in the memory 47 every time when they are calculated.

After the calculation correction coefficients Cx and Cy is finished (after Step S305) or when the entering movement is finished (No in Step S304), the position corrector 44 uses the correction coefficients to perform the correction calculation of the position of the user's finger Fg on the position detection plane Iv (Step S306). Note that the cases where the entering movement is finished include a case where the user's finger Fg is stopped and a case where the user's finger Fg temporarily enters the detection area Sa and then performs another movement (for example, an operation of another key of the virtual key board.

The position corrector 44 performs coordinate correction of the position in the x-direction and in the y-direction on the position detection plane Iv based on a variation of the user's finger Fg in the z-direction. Then, the position corrector 44 regards the corrected position coordinates calculated in Step S306 as the position of the user's finger Fg on the position detection plane Iv (Step S307). After that, the process returns to the position fixing process (S4) of the main process.

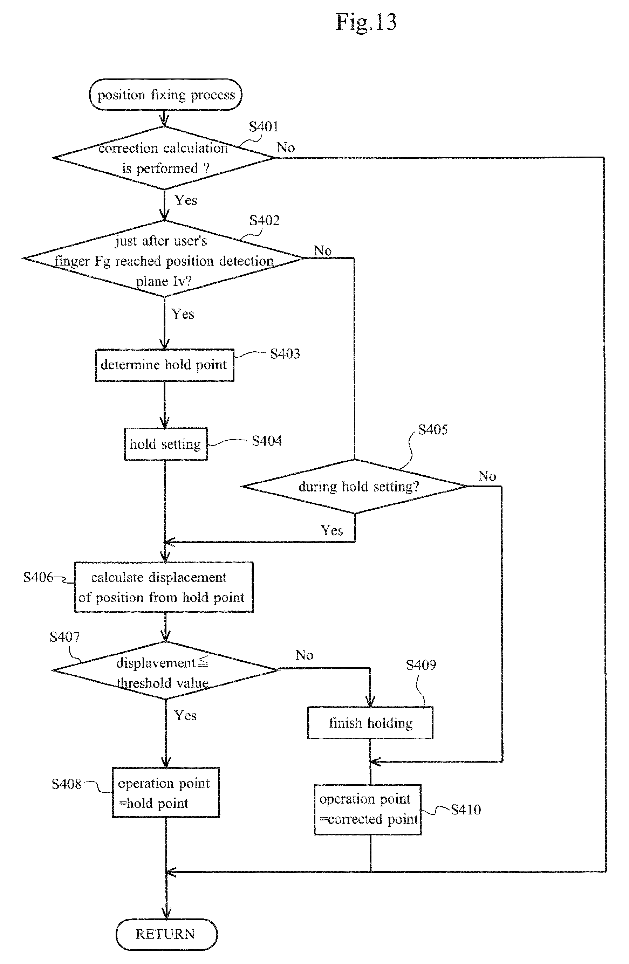

After performing the position correction in the process of Step S3, the position fixing process (Step S4) is performed based on the corrected position information. Fig. 13 is a flowchart illustrating details of the position fixing process. The position fixing process is described below.

For example, as shown in Fig. 10, the position on the position detection plane Iv of the point (the position Tp1) at which the user's finger fg contacts with the position detection plane Iv is within the range of the key Ky to be operated. On the other hand, the corrected position of the position Tp2 on the position detection plane Iv is out of the range of the key Ky to be operated. If the user's finger Fg stops at the position Tp2, the position corrector 44 transmits the corrected position (coordinates) of the position Tp2 as an operation position of the user's finger Fg on the position detection plane Iv to the host controller Cnt. In the host controller Cnt, the input operation is not accurately performed because the received position (operation position) of the user's finger Fg on the position detection plane Iv is shifted from the position of the key Ky.

Therefore, the position corrector 44 of the processor 400 of the position detector A utilizes the fact that the point at which the user's finger Fg first overlaps the position detection plane Iv has a high accuracy, so as to fix (referred to as "hold") the position of the user's finger Fg on the position detection plane Iv to the point even if the position is shifted after that. This point at which the user's finger Fg first overlaps is referred to as a hold point. In addition, a circle having a constant radius from the hold point is referred to as a hold circle Ch.

If the corrected position of the user's finger Fg on the position detection plane Iv when the movement in the z-direction is stopped is within the hold circle Ch, it is considered that the user has moved the user's finger Fg to contact with the hold point. On the other hand, if the corrected position of the user's finger Fg on the position detection plane Iv when the movement in the z-direction is stopped is out of the hold circle Ch, it is determined that the user's finger Fg intends to operate a key at a position other than the current hold point, and the hold is not performed. Details of the position fixing process are described below.

As shown in Fig. 13, it is checked whether or not the position corrector 44 has corrected the position of the user's finger Fg on the position detection plane Iv (Step S401). If the correction is not performed (No in Step S401), the position corrector 44 determines that the user's finger Fg has not reached the position detection plane Iv, and returns to position notification (Step S5) of the main process. When determining that the correction is performed (Yes in Step S401), the position corrector 44 checks whether or not the user's finger Fg has just reached the position detection plane Iv (Step S402).

As described above, it is utilized that the position at which the user's finger Fg first overlaps the position detection plane Iv has a high accuracy in many cases, when operating the virtual user interface displayed on the position detection plane Iv. Therefore it is checked that the user's finger Fg has reached the position detection plane Iv.

If the user's finger Fg has just reached the position detection plane Iv (Yes in Step S401), the position corrector 44 determines the current displacement reference point (position Tp1) to be the hold point (Step S403) and starts hold setting (Step S404).

If it is not just after the user's finger Fg reached the position detection plane Iv (No in Step S402), the position corrector 44 checks whether or not the hold setting is being performed (Step S405). If the hold setting is not being performed (No in Step S405), the position corrector 44 sets the corrected position to the operation position (Step S410) and returns to the position notification (S5) of the main process. Here, the operation position is the position of the user's finger Fg on the position detection plane Iv when operating the virtual user interface, and it is the position notified to the host controller Cnt in the position notification (Step S5) of the main process.

When the hold setting is performed (Step S404) or while the hold setting is being performed (Yes in Step S405), it is checked whether or not the corrected position is within the hold circle Ch. Therefore the position corrector 44 calculates a positional displacement between the hold point and the corrected position of the user's finger Fg on the position detection plane Iv (Step S406).

There is a case where the user's finger Fg is operating the virtual user interface, or a case where the position of the user's finger Fg is adjusted. In this case, the user's finger Fg may be moved by user's intention so that the operation position is deviated from the hold point.

Therefore the position corrector 44 checks whether or not the positional displacement is a predetermined threshold value or smaller (Step S407). If the positional displacement is larger than the threshold value (No in Step S407), the position corrector 44 determines that the user intentionally moves the position of the finger Fg on the position detection plane Iv largely from the hold point and finishes the hold setting (Step S409). Then, the position corrector 44 sets the corrected position to the operation position (Step S410) and returns to the position notification (Step S5) of the main process.

If the positional displacement is the threshold value or smaller (Yes in Step S407), the position corrector 44 determines that the displacement of the operation position from the hold point is shifts (a shift) in the x-direction and (or) in the y-direction due to a shake of the user's finger Fg in the z-direction. The position corrector 44 sets the hold point to the operation position (Step S408) and returns to the position notification (Step S5) of the main process.

By performing the control described above, the input operation using the virtual user interface (keyboard) can be accurately performed. For example, as shown in Fig. 10, when the user's finger Fg is shifted in the x-direction and in the y-direction accompanying with the movement in the z-direction, the operation position is held at the position Tp1 at which the user's finger Fg first overlaps the position detection plane Iv. In this way, even if the position of the user's finger Fg (pointer) in the z-direction is varied, it is possible to suppress shifts (a shift) of the position of the user's finger Fg on the position detection plane Iv in the x-direction and (or) in the y-direction. In this way, it is possible to improve accuracy of the input operation using the virtual user interface displayed on the position detection plane Iv. Further, in this embodiment, the operation position on the position detection plane Iv is varied in the x-direction and in the y-direction due to a variation of the pointer in the z-direction, but this is not a limitation. It is possible to adopt in a case where the operation position is varied in the x-direction or in the y-direction.

<Variations>

In the example described above, when the user's finger Fg reaches the position detection plane Iv, the operation is performed. However, there is also a case where the user judges that the user's finger Fg has reached the position detection plane Iv, but actually it has only been close to the position detection plane Iv without reaching the same. In this case, even if the user intends to operate the virtual user interface, the input device Ip does not recognize it to be an input operation.

Therefore, even if the user's finger Fg has not reached the position detection plane Iv, if a movement speed of the user's finger Fg becomes a predetermined speed or lower, the input device Ip accepts the user's operation.

The operation of the input device when the user's finger Fg has not reached the position detection plane Iv is described below. It is supposed that the user operates the virtual user interface displayed on the position detection plane Iv with his or her finger Fg, i.e., the user presses the key Ky illustrated in Fig. 10, for example.

The input device Ip receives the inspection light reflected by the user's finger Fg every constant period. Therefore, the position detector 43 detects the movement speed of the user's finger Fg based on the information of the position and the information of the time. The input device Ip determines that an input operation by the user's finger Fg is made when the user's finger Fg becomes the predetermined speed or lower. Therefore, the position detector 43 detects a distance between the user's finger Fg and the position detection plane Iv based on the information (numbers and the number) of the scanning lines that the user's finger Fg crosses.

The position detector 43 determines a position when the movement speed of the user's finger Fg becomes the predetermined speed or lower and sends information of the position to the position corrector 44. The position corrector 44 calculates a first position corrected to be a position of the user's finger on the position detection plane Iv based on the position and a locus of movement of the user's finger Fg up to now. The position corrector 44 determines the first position to be the current position.

As described above, by calculating the first position, the operation input using the virtual user interface by the user's finger Fg can be performed when the user's finger Fg does not approach the position detection plane Iv or cross the position detection plane Iv.

To increase the accuracy of the user's operation, if a distance between the user's finger Fg and the position detection plane Iv becomes a predetermined value or smaller, the input device Ip can accept the user's operation.

When the user operates the input device Ip, the user's finger Fg has not reached the position detection plane Iv. In this case, if a distance between the user's finger Fg and the position detection plane Iv becomes a predetermined value or smaller, the input device Ip accepts the user's operation. Therefore, the position detector 43 detects a distance between the user's finger Fg and the position detection plane Iv based on the information (numbers and the number) of the scanning lines that the user's finger Fg crosses.

The position detector 43 determines the position when the distance between the user's finger Fg and the position detection plane Iv becomes the predetermined distance or smaller to be a second position and sends information of the second position to the position corrector 44. The position corrector 44 calculates the first position corrected to be a position of the user's finger on the position detection plane Iv, based on above mentioned the position and the second position. The position corrector 44 determines the first position to be the current position.

As described above, by calculating the first position, the operation input using the virtual user interface by the user's finger Fg can be performed when the user's finger Fg approaches within the predetermined distance from the position detection plane Iv and the movement speed of the user's finger Fg becomes the predetermined speed or lower.

The second position when the user's finger Fg approaches within the predetermined distance from the position detection plane Iv is regarded as the above-mentioned position Tp1. Then, using the position when the movement speed of the user's finger Fg becomes the predetermined speed or lower as the above-mentioned position Tp2, the first position on the position detection plane Iv may be calculated from the above correction equation.

As described above, the position detector 43 detects the position and the movement speed of the user's finger Fg with respect to the position detection plane Iv, and hence it is possible to detect the input to the virtual user interface by the user's finger Fg approaching the position detection plane Iv. Note that it is also possible to detect the input to the virtual user interface by the user's finger Fg moving beyond the position detection plane Iv, by using the position and the movement speed with respect to the position detection plane Iv.

For example, by setting zero to the predetermined distance for determining the second position, the second position becomes the same as the position Tp 1 described above. In addition, the position Tp2 described above is the position when the user's finger Fg is stopped, i.e., when the movement speed becomes zero, and therefore the position Tp2 is substantially the same as the position.

In addition, if a distance between the position and the second position is a predetermined length or smaller, i.e., if the position is within the hold circle having the second position as the hold point, the position corrector 44 may calculate the first position on the position detection plane Iv from the second position.

<Second Embodiment>

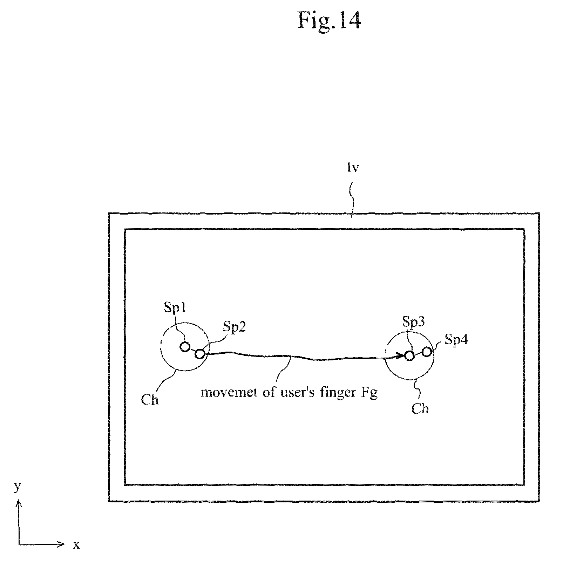

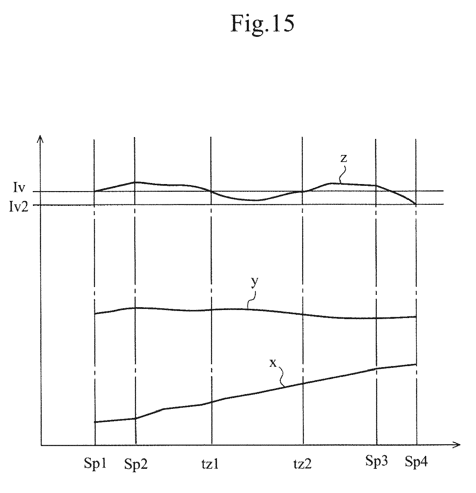

Another example of the input device according to the present invention is described with reference to the drawings. Fig. 14 is a diagram illustrating a state where the user's finger is performing an input operation, and Fig. 15 is a diagram illustrating shakes of the user's finger in the x, y and z directions when performing the input operation illustrated in Fig. 14. Note that the structure of the input device Ip is the same as in the first embodiment, and hence a description of the structure is omitted. Fig. 14 is a diagram of the position detection plane Iv viewed from the user, and Fig. 10 illustrates the xy plane. In addition, Fig. 15 illustrates a movement of the user's finger Fg, in which the horizontal axis represents time, while the vertical axis represents a distance. Further, the uppermost graph shows the movement in the z-direction, the next graph shows the movement in the y-direction, and the lowermost graph shows the movement in the x-direction.

As the virtual user interface displayed on the position detection plane Iv, there is one for performing free hand input scanning (drawing) such as a virtual touch panel. In a normal touch panel for inputting by physical touching, it is detected that the user's finger contacts with the touch surface of the touch panel, and coordinates of the touched part on the touch surface are detected, so that the input scanning is performed.

In the same manner for the virtual touch panel, it is detected that the user's finger Fg overlaps the touch surface of the virtual touch panel (corresponding to the physical touching described above), and by maintaining the touch state while moving the user's finger Fg, the input scanning is performed. In the case where the virtual touch panel is displayed on the position detection plane Iv, the input device Ip detects information that the user's finger Fg is moving in the state overlapping with the position detection plane Iv, so as to recognize that the input scanning is performed.

Note that as a method of detecting the position of the user's finger Fg, in the same manner as in the first embodiment, the reflected light when the user's finger Fg crosses the scanning lines of the light scanning the detection area Sa is received by the light receiver 300 for the detection. Further, the correction calculation of the position of the user's finger Fg on the position detection plane Iv is also performed by the same method as in the first embodiment.

Fig. 14 illustrates the position of the user's finger Fg on the position detection plane Iv when an input to the virtual touch panel is being performed. Note that in the input to the virtual touch panel illustrated in Fig. 14, it is supposed that a straight line from a position Sp1 to a position Sp4 is input to the virtual touch panel. The user's finger Fg is put to overlap the input start position on the position detection plane Iv (the position Sp1 in Fig. 14). Then, the user stops movement of the finger Fg at a position Sp2. In other words, the user's finger Fg is put at the input start position on the virtual touch panel so as to start the input. Then, the user's finger Fg is moved in the x-direction. Further, the user's finger Fg is pulled out from the position detection plane Iv at the input end position (the position Sp4) so as to finish the input.

The user accurately grasps the position Sp1 as an input start point to a certain degree. Therefore the user's finger Fg overlaps the position detection plane Iv at the position Sp1. The position Sp1 becomes the displacement reference point. Then, the movement of the user's finger Fg is stopped at the position Sp2.

The input device Ip recognizes that the input is started when the movement of the user's finger Fg in the z-direction is stopped. Due to a deviation of the stop position in the z-direction, the position of the user's finger Fg on the position detection plane Iv may be deviated from the input start position. In this case, the input is started from the user's unintended position, which may cause a decrease in input accuracy. Therefore, the input device Ip of this embodiment performs a process similar to the position fixing process in the first embodiment only when the input is started. In other words, when the user's finger Fg overlaps the position detection plane Iv at the position Sp1 and stops the movement after moving to the position Sp2, position fixing is performed so that the start position of the input becomes the position Sp1 (that is also the displacement reference point). Note that if the position Sp2 is out of the hold circle Ch having the center at the position Sp1, the start position is set to the position Sp2.

After the input operation is started, the user moves the finger Fg for the input (here, moves in the x-direction). In the virtual touch panel, when the user's finger Fg overlaps (crosses) the touch surface and moves, the input is performed. When the user linearly moves the finger Fg in the space, the movement is actually not a straight line in many cases even if the user intends to accurately move. In other words, the user's finger Fg moves along the position detection plane Iv in the substantially x-direction while fluctuating in the x-direction, in the y-direction, and in the z-direction (see Fig. 15).

When moving the user's finger Fg, it may be shifted to the front side in the z-direction (on the first boundary plane Sa1 side) so as to be out from the position detection plane Iv. If the user's finger Fg is out from the position detection plane Iv, it is determined that the user's finger Fg is apart from the touch surface of the virtual touch panel. Consequently, the input is stopped, and accurate input may not be performed.

This is described with reference to Fig. 15. As shown in Fig. 15, when the user's finger moves from the position Sp2 to the position Sp4, because of the movement is in the x-direction, the position in the x-direction increases while it fluctuates to some degree. In addition, the position in the y-direction is stabilized although there is a variation to some degree.

In Fig. 15, as to the position in the z-direction, the lower side corresponds to the front side of the detection area Sa (the first boundary plane Sa1 side). As shown in Fig. 15, a variation in the z-direction is larger than variations in the x-direction and in the y-direction. Further, during the period between time points tz1 and tz2, the user's finger Fg is moved (pulled out) from the position detection plane Iv toward the first boundary plane Sa1. In the virtual touch panel of this embodiment, when the user's finger Fg is pulled out from the position detection plane Iv, the input operation is finished.

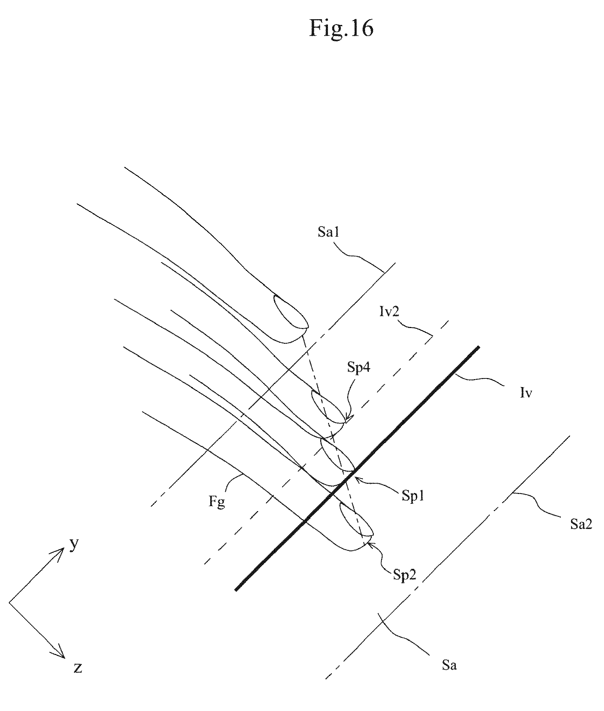

Therefore the input device Ip of this embodiment deals with a fluctuation of the user's finger in the z-direction. Fig. 16 is a diagram illustrating the detection area used in another example of the input device according to the present invention. As shown in Fig. 16, the position detector A includes a second position detection plane Iv2 in the detection area Sa at a position on the first boundary plane Sa1 side in the z-direction of the position detection plane Iv. Further, the input device Ip continues the input movement during a period while the user's finger Fg is crossing the second position detection plane Iv2 even if the user's finger Fg is pulled out from the position detection plane Iv, so that the input is continued even if the user's finger Fg is pulled out from the position detection plane Iv with fluctuation in the z-direction when the user's finger Fg moves. Note that the input device Ip recognizes that the input operation is started when the user's finger Fg overlaps the position detection plane Iv, and it recognizes that the input operation is finished when the user's finger Fg is pulled out from the second position detection plane Iv2.

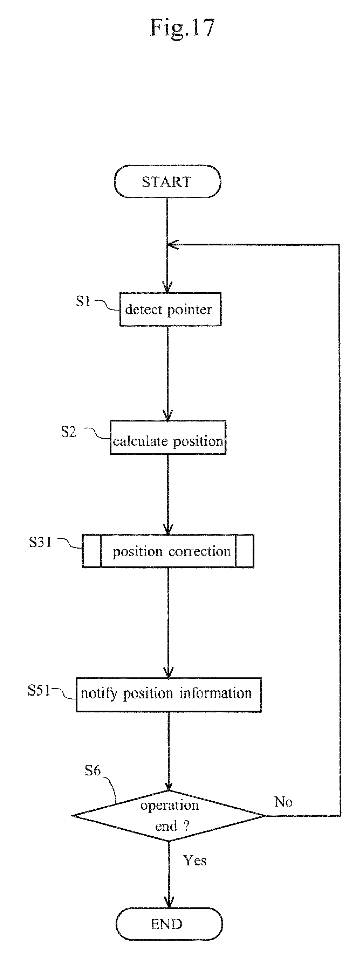

An accurate input operation to the virtual touch panel by the user's finger Fg is described below with reference to the drawings. Fig. 17 is a flowchart of the input operation using the input device according to the present invention.

The process in the flowchart illustrated in Fig. 17 is the same as that illustrated in Fig. 11 except that the position fixing process is omitted, and except for the position correction process (Step S31) and the position information notification (Step S51). Description of details of the process is omitted. The position correction process S31 illustrated in Fig. 17 includes the position fixing process just after the input is started, as described above.

In addition, the position information notification (Step S51) is a step corresponding to the position notification (Step S5) in the flowchart of Fig. 11. In the position notification (Step S5), the position of the user's finger Fg on the position detection plane Iv is transmitted to the host controller Cnt via the external output unit 45. In contrast, in the position information notification (Step S51), not only the position but also the information of finishing the input operation is transmitted to the host controller Cnt via the external output unit 45.

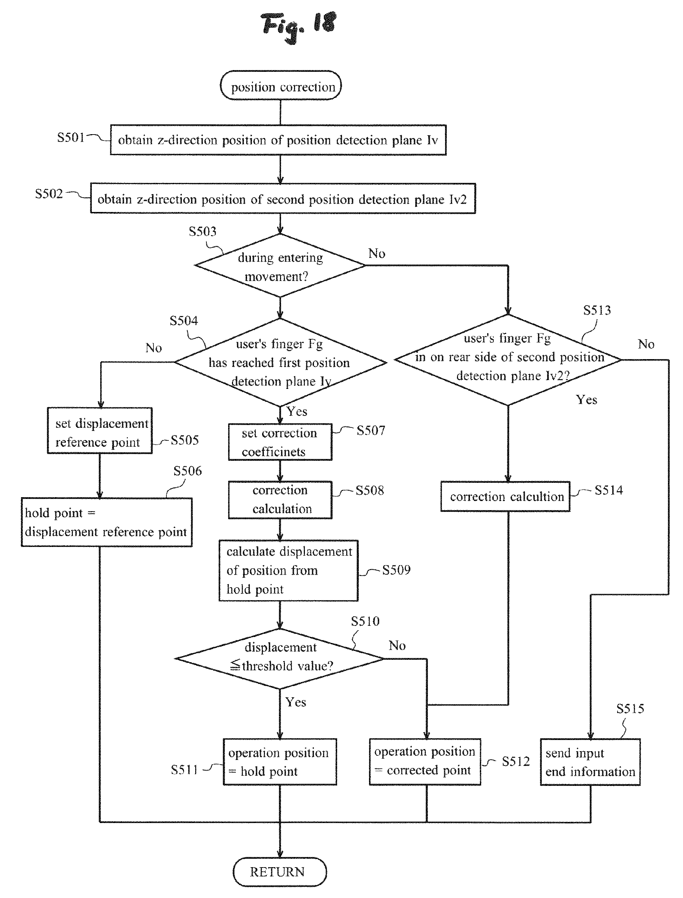

The operation of the input device according to this embodiment is described below with reference to the drawings. Fig. 18 is a flowchart illustrating a process of correcting the position of the user's finger.

The position detector 43 detects the position of the position detection plane Iv in the z-direction (the number of scanning lines arranged between the first boundary plane Sa1 and the position detection plane Iv) (Step S501). Further in the same manner, the position detector 43 detects the position of the second position detection plane Iv2 in the z-direction (the number of scanning lines arranged between the first boundary plane Sa1 and the second position detection plane Iv2) (Step S502).

The position detector 43 checks whether or not the user's finger Fg is moving into the detection area Sa (in the entering movement) based on the position information of the user's finger Fg (Step S503). If the user's finger Fg is in the entering movement (Yes in Step S503), the position detector 43 checks whether or not the user's finger Fg has reached the position detection plane Iv based on the information (numbers and the number) of the scanning lines that the user's finger Fg crosses (Step S504). Note that the process of Step S504 is the same as that of Step S302 in the flowchart of Fig. 11.

If the user's finger Fg has not reached the position detection plane Iv (No in Step S504), the current position of the user's finger Fg is set to the displacement reference point (Step S505). Then, the hold point is set to the displacement reference point (Step S506), and the process returns to the position information notification (Step S51) of the main process.

If the user's finger Fg has reached the position detection plane Iv (Yes in Step S504), the position corrector 44 calculates and sets the correction coefficient for the position correction of the user's finger Fg on the position detection plane Iv (Step S507). After that, the position corrector 44 calculates the corrected position of the user's finger Fg on the position detection plane Iv (Step S508). Note that Steps S507 and S508 are respectively the same as Steps S305 and S306 in the flowchart of Fig. 11.

In the input operation to the virtual touch panel, as described above, the position fixing process is performed to fix the position of the user's finger Fg on the position detection plane Iv when the input is started. In other words, it is checked whether or not the corrected position on the position detection plane Iv of the position (position Sp2) when the movement of the user's finger Fg in the z-direction is stopped is within the hold circle Ch. Therefore the position corrector 44 calculates a displacement of the corrected position from the hold point (Step S509).

The position corrector 44 checks whether or not the positional displacement is a predetermined threshold value or lower (Step S510). If the positional displacement is higher than the threshold value (No in Step S510), the position corrector 44 determines that the user intentionally moves the position of the finger Fg on the position detection plane Iv largely from the hold point. Then, the position corrector 44 sets the corrected position to the operation position (Step S512), and returns to the position information notification (Step S51) of the main process.

If the positional displacement is the threshold value or lower (Yes in Step S510), the position corrector 44 determines that the displacement of the operation position from the hold point is shifts (a shift) in the x-direction and (or) in the y-direction due to a shake of the user's finger Fg in the z-direction. The position corrector 44 sets the hold point to the operation position (Step S511) and returns to the position information notification (Step S51) of the main process.

Note that the process from Step S509 to Step S512 is the same as that from Step S406 to Step S410 in the flowchart illustrated in Fig. 13. In addition, when scanning the virtual touch panel, the process of Steps S509 to S511 is performed only when the input is started.

In addition, if the user's finger Fg is not in the entering movement (No in Step S503), it is determined that the input to the virtual touch panel is being performed. The position corrector 44 checks whether or not the user's finger Fg is on the rear side in the z-direction of the second position detection plane Iv2 (Step S513). As described above, when the user's finger Fg moves in the space, the user's finger Fg may be pulled out in the z-direction so that the user's finger Fg does not overlap the position detection plane Iv. Because the second position detection plane Iv2 on the first boundary plane Sa1 side of the position detection plane Iv is set as a reference for the user's finger Fg, even if the user's finger Fg fluctuates in the z-direction during the movement so as not to reach the position detection plane Iv, the input operation can be continued.

If the user's finger Fg is on the near side in the z-direction of the second position detection plane Iv2 (No in Step S513), the position corrector 44 determines that the user's finger Fg is pulled out so that the input operation is finished, and it outputs the information that the input operation is finished to the external output unit 45 (Step S515). Then, the process returns to the position information notification (Step S51) of the main process. Note that in the position information notification (Step S51), the information that the scanning input is finished is transmitted to the host controller Cnt via the external output unit 45.

If the user's finger Fg is on the rear side in the z-direction of the second position detection plane Iv2 (Yes in Step S513), the position corrector 44 performs the correction calculation for calculating the corrected position of the user's finger Fg on the position detection plane Iv (Step S514). Note that the correction calculation (Step S514) is the same as the correction calculation (Step S508). Further, the corrected position calculated in the correction calculation is set to the operation position (Step S512), and the process returns to the position information notification (Step S51) of the main process.

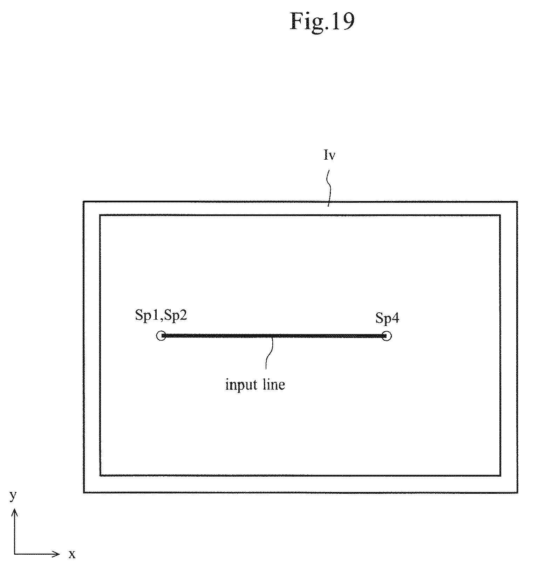

The input operation recognized by the host controller Cnt performing the above-mentioned control is described below. Fig. 19 is a diagram illustrating an input operation when the control illustrated in Figs. 17 and 18 is performed. Fig. 19 is a diagram of the position detection plane Iv viewed from the user side, illustrating an operation of drawing a straight line in the x-direction. Note that the movement of the user's finger Fg is as illustrated in Figs. 14 and 15. The user's finger Fg overlaps the position detection plane Iv at the position Sp1 and then temporarily stops at the position Sp2. In this case, because the corrected position of the position Sp2 on the position detection plane Iv is within the hold circle Ch, the start point of the input operation is the position Sp1. After that, as illustrated in Fig. 15, the user's finger Fg moves in the x-direction while maintaining the state of not being pulled out from the position detection plane Iv or the second position detection plane Iv2. Further, when the user's finger Fg is pulled out from the second position detection plane Iv2 at the position Sp4, the input operation is finished. Therefore the straight line from the position Sp1 to the position Sp4 as illustrated in Fig. 19 is input.

As described above, the input device Ip according to this embodiment sets the second position detection plane Iv2 on the near side in the pulling-out direction of the user's finger Fg of the position detection plane Iv, and hence it is possible to prevent the input from being stopped at a midpoint, even if a shake of the user's finger Fg occurs in the pulling-out direction, i.e., the z-direction when moving the user's finger Fg for the input operation (touch operation).

The input device Ip of this embodiment described above exemplifies the structure for drawing (inputting) a straight line with the virtual touch panel. This input operation of moving the user's finger Fg while maintaining the state of overlapping (crossing) the position detection plane Iv can also be used as an operation of moving an icon or the like, for example.

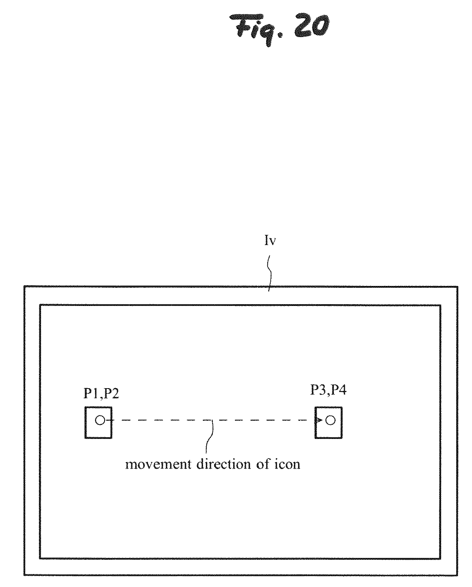

A procedure of an operation such as moving an icon is described below with reference to the drawing. Fig. 20 is a diagram illustrating a state in which an input is being performed by a locus of the user's finger. The virtual user interface illustrated in Fig. 20 is the virtual touch panel. In Fig. 20, the position detection plane Iv of the virtual user interface is an image display of an external apparatus (for example, an image display area of a liquid crystal panel). Here, it is used for moving an icon from the position Sp1 to a position Sp3.

As described above, the position detector 43 determines that the user's finger Fg overlaps the position detection plane Iv at the position Sp 1. Then, the position detector 43 determines that the movement of the user's finger Fg in the z-direction is stopped at the position Sp2, and the position corrector 44 corrects the position of the position Sp2 and performs the position fixing (holding), as necessary.

The host controller Cnt recognizes that the input operation is started when the movement of the user's finger Fg in the z-direction is stopped. Further, the input operation start position is the position Sp1 when the holding is performed, while it is the position Sp2 when the holding is not performed. Here, it is supposed that the holding is performed, and hence the position Sp1 is the input start position.

Further, when detecting the information that the user's finger Fg has moved to the position Sp3, the host controller Cnt determines that the input operation is finished (Step S6 of the main process). In this way, when it is detected that the user's finger Fg has moved to the predetermined position (the position Sp3), it may be determined that the input operation is finished.

In addition, for example, it is supposed that the user's finger Fg is stopped for a predetermined time period and then is pulled out so as not to overlap the position detection plane Iv (the second position detection plane Iv2). If the position (the position Sp4) at which the user's finger Fg becomes not to overlap the position detection plane Iv (the second position detection plane Iv2) is within the hold circle Ch having the stop position (for example the position Sp3) as the center, the host controller Cnt sets the end position of the input operation to the stop position (the position Sp3).

If the position (the position Sp4) at which the user's finger Fg becomes not to overlap the position detection plane Iv (the second position detection plane Iv2) is outside the hold circle Ch having the stop position (for example position Sp3) as the center, the host controller Cnt sets the end position of the input operation to the position (the position Sp4) at which the user's finger Fg becomes not to overlap.

In this way, by performing the position fixing process also when the scanning is finished, the input operation by the movement of the user's finger Fg can be accurately performed.

Note that the position of the second position detection plane Iv2 may be a predetermined position, or it may be appropriately changed according to a use state by the user. If it is changeable according to a use state by the user, the setting is made according to a user's habit, and hence convenience can be improved.

Note that it is possible to determine that the operation input is being performed when the user's finger Fg has approached within the predetermined distance from the position detection plane Iv, or when the movement speed becomes a predetermined speed or lower in addition to that the user's finger Fg has approached within the predetermined distance from the position detection plane Iv. In this case, the input is started from the second position calculated from the first position or is started from the second position calculated from the first position and the third position. In addition, when the operation input is performed based on a fact that the user's finger Fg has approached within the predetermined distance from the position detection plane Iv in this way, if a distance between the user's finger Fg and the position detection plane Iv is within a constant range, it may be determined that the operation input is continued. In other words, the position detector 43 determines that the input movement is switched based on the determination of the second position.

<Third Embodiment>

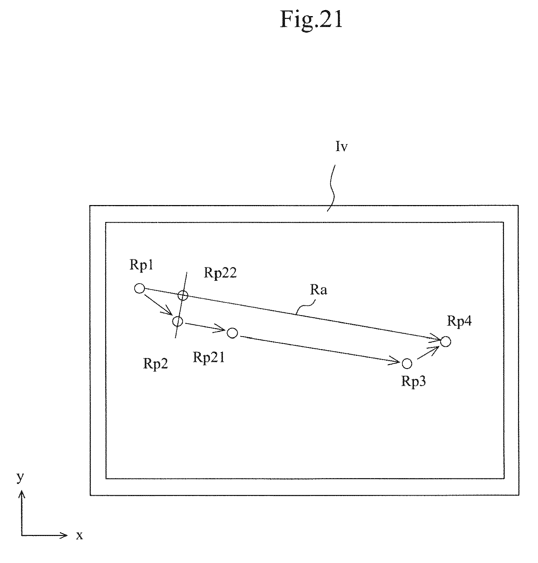

Another example of the position detector according to the present invention is described with reference to the drawings. Note that the structure of the input device Ip is the same as that in the first embodiment, and description thereof is omitted. Fig. 21 is a diagram illustrating a movement of the user's finger on the position detection plane. The movement of the user's finger Fg illustrated in Fig. 21 is similar to the movement of the user's finger Fg illustrated in Fig. 14. In other words, the user's finger Fg crosses the position detection plane Iv at a position Rp1, and the position in the z-direction become stabilized at a position Rp2. After that, the user's finger Fg moves toward a position Rp3 and moves (is pulled out) to the first boundary plane Sa1 side of the position detection plane Iv at a position Rp4.

A difference between the movement of the user's finger Fg illustrated in Fig. 21 and the movement of the user's finger Fg illustrated in Fig. 14 is described below. In the movement of the user's finger Fg illustrated in Fig. 14, the user's finger Fg overlaps (crosses) the position detection plane Iv at the position Sp1 and temporarily stops at the position Rp2. On the other hand, in the movement of the user's finger illustrated in Fig. 21, the user's finger Fg overlaps (crosses) the position detection plane Iv at the position Rp1, and the movement in the z-direction is stopped (stabilized in the z-direction) at the position Rp2, but the movements in the x-direction and in the y-direction are not stopped, and the user's finger Fg moves toward the position Rp3. In other words, the user's finger Fg is stopped at the input start position in the movement illustrated in Fig. 14, but in the movement illustrated in Fig. 21, the user's finger Fg moves to perform the input operation continuing to the movement to the input start position.

In the case of the movement illustrated in Fig. 21, because the movement in the z-direction is stabilized, it is considered that the user is performing the input operation after the finger Fg reaches the position Rp2. On the other hand, the user recognizes that the input start point is the position Rp 1 by visual recognition or the like. In other words, it is considered that the user has started the operation from the position Rp1 and is moving the finger Fg in the movement direction when moving from the position Rp2 to a position Rp21.

Therefore the position corrector 44 performs the position correction process as described below. First, the position corrector 44 checks that the user's finger Fg has moved from the position Rp1 to the position Rp2, i.e., that the movement in the z-direction is stabilized. After that, when the user's finger Fg moves from the position Rp2 to the position Rp3, the position information of the position Rp21 that is a predetermined distance moving from the position Rp2 is detected. The position Rp21 may be a position after a predetermined time period elapses from the position Rp2 (after the scanning is performed predetermined times), or it may be a position after moving a predetermined distance.

The position corrector 44 calculates and obtains the movement direction when moving from the position Rp2 to the position Rp21. This movement direction is the same or substantially the same as the movement direction intended by the user. Further, as described above, because the user grasps the start position of the input operation with high accuracy, the input operation desired by the user on the virtual touch panel becomes a path that passes the position Rp1 and is parallel to the movement direction from the position Rp2 to the position Rp21. In this embodiment, the position Rp2 is not the input start point but a midpoint in the input operation. Therefore correction calculation different from that described above is necessary.

First, the displacement reference point is described. The start point of the input operation is the position Rp1. The path for moving from the position Rp1 to the position Rp2 is a part of the input operation by the user's finger Fg. The movement direction of the user's finger Fg on the position detection plane Iv in the input operation is the direction from the position Rp2 to the position Rp21. Therefore a path Ra that passes the position Rp1 and is parallel to the movement direction from the position Rp2 to the position Rp21 is set. Then, the intersection between the path Ra and the normal of the path Ra from the position Rp2 is set to a position Rp22. The position Rp1 is set to the first reference point having coordinates (x1, y1, z1), and the position Rp2 is set to the second reference point having coordinates (x2, y2, z2). Because the path Ra is a path passing the position Rp1, it is on the position detection plane Iv. Because the position detection plane Iv is expressed by z = z1, coordinates of the position Rp22 are (xc, yc, z1). Note that xc and yc can be calculated based on coordinates of the first reference point, the second reference point, and the point Rp21.

The position of the user's finger Fg is corrected to the position on the position detection plane Iv using the position Rp22 as the displacement reference point so that the corrected position on the path Ra is obtained, and hence accuracy of the input operation can be improved. The correction equations of the user's finger Fg in the x-direction and in the y-direction are expressed by fx(x, z) and fy(y, z) as below using correction coefficients Cx1 and Cy1:

$$fx(x, z) = x-(z-z1)\times Cx1,$$

and

$$fy(y, z) = y-(z-z1)\times Cy1,$$

where,

$$Cx1 = (x2-xc)/(z2-z1),$$

and

$$Cy1 = (y2-yc)/(z2-z1).$$

Using these calculation equations, the movement of the user's finger Fg is corrected, and hence accuracy of the input operation can be improved.

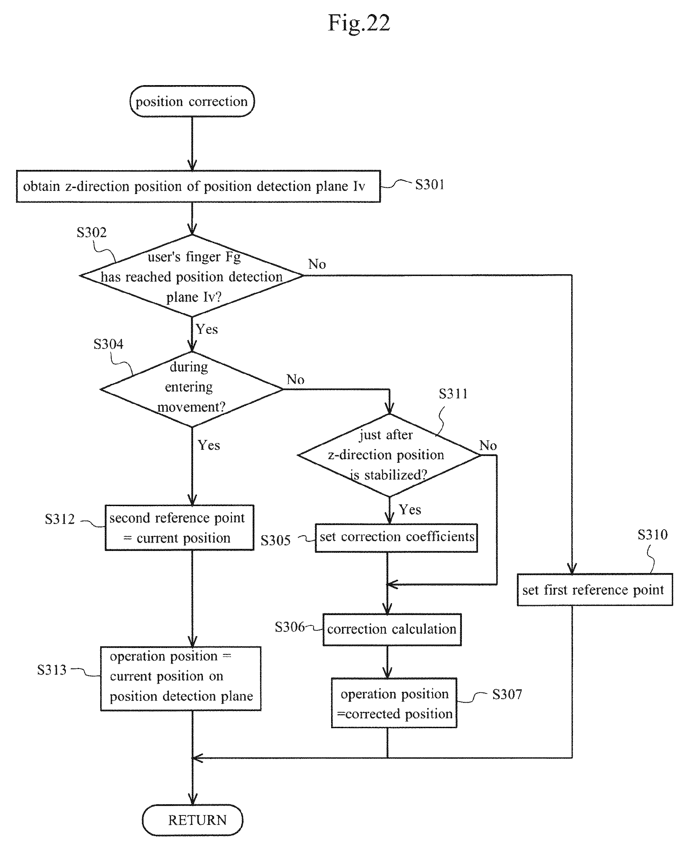

An operation of the virtual user interface when the correction is performed using the above correction calculations is described below with reference to the drawings. Fig. 22 is a flowchart of the process of correcting the position of the user's finger. The flowchart illustrated in Fig. 22 is the same as the flowchart illustrated in Fig. 12 except for additional Steps S310 to S313. Therefore detailed description of the substantially same Steps is omitted. Note that the main process is the same as in the second embodiment.

As shown in Fig. 22, the position detector 43 detects the position in the z-direction of the position detection plane Iv on which the virtual touch panel is displayed (Step S301). The position detector 43 checks whether or not the user's finger Fg has reached the position detection plane Iv (Step S302). If the position detector 43 determines that the user's finger Fg has not reached the position detection plane Iv (No in Step S302), the position corrector 44 sets the current position of the tip of the user's finger Fg to the first reference point (Step S310). Note that the first reference point is a reference point for performing the correction in the x-direction and in the y-direction when the user's finger Fg moves in the z-direction beyond the position detection plane Iv, as described above. For example, it is the point at which the user's finger Fg first overlaps the position detection plane Iv and is the same as the position Rp1 illustrated in Fig. 21 after the user's finger Fg moves in the z-direction beyond the position detection plane Iv.

Because the user's finger Fg does not exceed the position detection plane Iv, the position corrector 44 returns to the position information notification (Step S51) of the main process. Note that the first reference point is updated in Step S310 until the tip of the user's finger Fg reaches the position detection plane Iv.

In addition, if the user's finger Fg has moved in the z-direction beyond the position detection plane Iv (Yes in Step S302), the position detector 43 checks whether or not the user's finger Fg is in the entering movement in the z-direction (Step S304). If the user's finger Fg is in the entering movement (Yes in Step S304), the position corrector 44 sets the current position of the tip of the user's finger Fg to the second reference point (Step S312). Note that the second reference point is the reference point for correction in the x-direction and in the y-direction when the user's finger Fg moves in the z-direction beyond the position detection plane Iv, as described above.

Further, the position corrector 44 sets the current position of the user's finger on the position detection plane Iv to the operation position (Step S313) and returns to the position information notification (Step S51) of the main process.

If the user's finger Fg is not in the entering movement (No in Step S304), the position corrector 44 checks whether or not the z-direction position of the user's finger Fg is just after being stabilized (Step S311). As described above, the correction coefficient are calculated based on the first reference point, the second reference point, and the position Rp21, after the position in the z-direction of the user's finger Fg is stabilized. Therefore it is checked whether or not the current state is just after the position of the user's finger Fg in the z-direction is stabilized (Step S311). Note that "just after the position of the user's finger Fg in the z-direction is stabilized" means after detecting coordinates of the position Rp21.

If the current state is just after the position of the user's finger Fg in the z-direction is stabilized (Yes in Step S311), the correction coefficient Cx1 in the x-direction and the correction coefficient Cy1 in the y-direction are set based on the first reference point, the second reference point, and the position Rp21 (Step S305). Note that the calculated correction coefficients Cx1 and Cy1 are stored in the memory 47. The calculation of the correction coefficients Cx1 and Cy1 is performed only once just after the position of the user's finger Fg in the z-direction is stabilized.

If the position of the user's finger Fg in the z-direction is not just after being stabilized (No in Step S311), or after finishing the calculation of the correction coefficients Cx1 and Cy1 (after Step S305), the position corrector 44 performs the correction calculation of the position of the user's finger Fg on the position detection plane Iv using the correction coefficients (Step S306). The position corrector 44 sets coordinates of the corrected position calculated in Step S306 to the position of the user's finger Fg on the position detection plane Iv (Step S307). After that, the process returns to the position information notification (S51) of the main process.

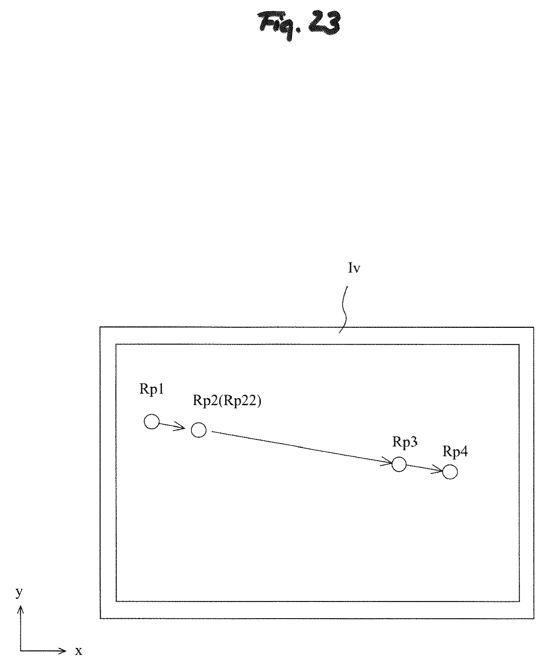

Fig. 23 is a diagram illustrating operation positions of the user's finger when the position correction process is performed. When the correction process described above is performed, the input operation started at the point Rp1 with the virtual touch panel is performed without stopping until the user's finger Fg reaches the position Rp4. In this way, the virtual touch panel can be accurately operated without stopping the user's finger Fg at the input start position.

Note that it is possible to adopt a structure in which both the process of the second embodiment and the process of the third embodiment are available, and one of the processes is selectively used according to the movement speed of the user's finger Fg in the detection area Sa or the movement state and amount at the position Rp2.

Although the embodiments of the present invention are described above, the present invention is not limited to these embodiments. In addition, the embodiments of the present invention can be modified variously without deviating from the spirit of the invention. In addition, the embodiments described above can be appropriately combined and implemented.

**Claims**

1. An input device comprising:

    a scan light source that emit inspection light for scanning a detection area;
    a light receiver that receive the inspection light after being reflected by a pointer;
    a position detector that detect a position of the pointer based on light received by the light receiver; and
    a position corrector that correct the position of the pointer on a position detection plane, **characterized in that**
    the position corrector determines a first position in the position detection plane based on a position that a movement speed of the pointer has become a predetermined value or lower.

2. The input device according to claim 1, **characterized in that**

    the position detector determines a second position based on a fact that a distance between the pointer and the position detection plane has become a predetermined length or smaller, and
    the position corrector determines the first position in the position detection plane based on the position and the second position.

3. The input device according to claim 2, **characterized in that** the position corrector determines the first position in the position detection plane based on the second position when a distance between the position and the second position is a predetermined length or smaller.

4. The input device according to any one of claims 1 to 3, **characterized in that** the position detector detects a position of the pointer in the detection area based on information of the inspection light reflected by the pointer.

5. The input device according to any one of claims 1 to 3, **characterized in that** the position detector detects a distance between the pointer and the position detection plane based on the number of the inspection light reflected by the pointer.

6. The input device according to any one of claims 1 to 5, **characterized in that** the position corrector determines the first position using a locus of the pointer to the first position.

7. The input device according to claim 6, **characterized in that** the position corrector sets a point at which the locus of the pointer to the position crosses the position detection plane to the first position.

8. The input device according to any one of claims 1 to 7, **characterized in that** the position detector determines that an input movement is switched based on determination of the first position.

9. The input device according to claim 8, **characterized in that** the position corrector generates a calculation equation for correction based on coordinates of the pointer when the input movement is switched and coordinates of the first position, and determine a current first position of the pointer using the calculation equation.

10. The input device according to claim 9, **characterized in that** the position corrector does not update the first position if the first position is determined in advance and if coordinates calculated from a current position of the pointer is within a predetermined distance from the first position determined in advance.

11. The input device according to claim 9 or 10, **characterized in that** the position corrector sets newly calculated coordinates to the first position if the second position is determined in advance and if coordinates calculated from a current position of the pointer is away from the first position determined in advance by a predetermined distance.

12. The input device according to any one of claims 1 to 11, **characterized in that** an input operation is started based on detection of the position by the position detector.

13. The input device according to any one of claims 1 to 12, **characterized in that** movement of the pointer is switched from movement entering the detection area to a predetermined movement based on detection of the position by the position detector.

14. The input device according to any one of claims 1 to 13, further comprising a recognizing portion that recognize end of the input operation based on a fact that the pointer becomes away from the position detection plane by a predetermined distance or more.

# Fig.1

Fig.2

A

400

processor                                                                41

scan light source controller

light
source   11

driver   111

100

light receiver
for monitroing   14

412

scan controller

light source
controller

411

201

optical scanner   2

driver

200

signal processor

202

42

light reciever

reciever

synchronizing
signal
generator   46

300

position detector   43

memory   47

position corrector   44

output unit   45

to host controller

Fig.3

# Fig.4

Fig.5

first direction

angle

Os1

angle

Os2

time

time

Sa

V

H

second direction

time

Fig.6

second direction

first direction

L1    L2        L400  L401   L402   L403   L404   L405        L800   L1

h401

light reception
signal

Fig.7

Fig.8

# Fig.9

Fig.10

# Fig.11

```
        ┌─────────┐
        │  START  │◄─────────────┐
        └────┬────┘              │
             │                   │
 S1 ──  ┌─────────────┐          │
        │detect pointer│          │
        └──────┬──────┘          │
             │                   │
 S2 ──  ┌─────────────┐          │
        │obtain position│         │
        └──────┬──────┘          │
             │                   │
 S3 ──  ┌──────────────┐         │
        │position correction     │
        │process       │         │
        └──────┬───────┘         │
             │                   │
 S4 ──  ┌──────────────┐         │
        │position fixing│         │
        │process       │         │
        └──────┬───────┘         │
             │                   │
 S5 ──  ┌──────────────┐         │
        │notify position│         │
        └──────┬───────┘         │
             │                   │
 S6 ──  ◇ operation end ◇──No────┘
             │?
             │Yes
        ┌─────────┐
        │   END   │
        └─────────┘
```

# Fig.12

position correction

obtain z-direction position of
position detection plane Iv ⟶ S301

S302

user's finger Fg
has reached position
detection plane? ⟶ No

Yes

S304

during
entering movement? ⟶ No

Yes

S305 ⟶ set correction coefficients

S306 ⟶ correction calculation

S307 ⟶ current position=
corrected position

set displacement
reference point ⟶ S303

RETURN

# Fig.13

```
            ( position fixing process )
                        │
                        ▼                    S401
              ◇ correction calculation ◇────No────────────────────┐
                 is performed ?                                     │
                        │                                          │
                       Yes                                         │
                        │                                          │
                        ▼               S402                       │
              ◇ just after user's ◇                               │
         ◇ finger Fg reached position detection ◇────No────┐      │
                 plane Iv?                                   │     │
                        │                                    │     │
                       Yes                                   │     │
                        │                                    │     │
                        ▼                                    │     │
              ┌──────────────────────┐  S403                 │     │
              │ determine hold point │                       │     │
              └──────────────────────┘                       │     │
                        │                                    │     │
                        ▼                                    │     │
              ┌──────────────┐  S404           S405          │     │
              │ hold setting │                               │     │
              └──────────────┘       ◇ during hold setting? ◇──No──┤
                        │            │         │                    │
                        │           Yes        │                    │
                        │◄───────────┘         │                    │
                        ▼                                           │
         ┌──────────────────────────┐                              │
S406 ────│ calculate displacement   │                              │
         │ of position from hold point │                           │
         └──────────────────────────┘                              │
                        │                                          │
     S407               ▼                                          │
              ◇ displavement ≦ ◇────No────┐                        │
                 threshold value          │                        │
                        │                 ▼                        │
                       Yes        ┌────────────────┐  S409         │
                        │         │ finish holding │               │
                        ▼         └────────────────┘               │
         ┌──────────────┐              │                           │
S408 ────│ operation point │          │◄──────────────┘           │
         │ =hold point   │            ▼                            │
         └──────────────┘    ┌──────────────────┐                 │
                        │    │ operation point  │ S410             │
                        │    │ =corrected point │                  │
                        │    └──────────────────┘                  │
                        │              │                           │
                        ▼◄─────────────┴───────────────────────────┘
                  ( RETURN )
```

Fig.14

Iv

Sp1

Sp2

Ch

movemet of user's finger Fg

Sp3

Sp4

Ch

y

x

Fig.15

# Fig.16

# Fig.17

```
                    ┌─────────────┐
                    │    START    │
                    └──────┬──────┘
                           │
                           ▼  ◄────────────────┐
                    ┌─────────────┐            │
              S1 ───│ detect pointer│           │
                    └──────┬──────┘            │
                           │                   │
                           ▼                   │
                    ┌──────────────┐           │
              S2 ───│calculate position│        │
                    └──────┬───────┘           │
                           │                   │
                           ▼                   │
                 ┌─┬──────────────────┬─┐       │
             S31─│ │position correction│ │      │
                 └─┴──────────────────┴─┘       │
                           │                   │
                           ▼                   │
              ┌──────────────────────────┐     │
        S51 ──│ notify position information│    │
              └──────────────┬───────────┘     │
                             │                 │
                             ▼                 │
                     ◇───────────────◇         │
                    ╱   operation      ╲   No  │
              S6 ──◇      end ?          ◇──────┘
                    ╲                   ╱
                     ◇───────┬────────◇
                             │ Yes
                             ▼
                    ┌─────────────┐
                    │     END     │
                    └─────────────┘
```

**Fig. 18**

```
                    ( position correction )
                            │
S501 ──┤ obtain z-direction position of position detection plane Iv │
                            │
S502 ── obtain z-direction position of second position detection plane Iv2 │
                            │
            S503            ▼
              ◇ during entering ──── No
                 movement?
                    │
       S504         ▼
No ──── ◇ user's finger Fg          ◇ user's finger Fg ──── No  S513
         has reached first position   in on rear side of second position
          detection plane Iv          detection plane Iv2?
                │                              │
 set displacement   │ Yes                      │ Yes
 reference point ─S505  set correction ─S507   │
                │        coefficinets           correction calcultion ─S514
       S506     ▼            │                  │
 hold point =          correction ─S508         │
 displacement reference point  calculation      │
                            │                   │
                     calculate displacement     │
                     of position from ─S509     │
                     hold point                 │
                            │                    │
                     S510   ▼                    │
                      ◇ displacement ──── No     │
                       ≦threshold value?         │
                            │ Yes                │
 S511 ─ operation position   operation position ─S512   send input
        = hold point         = corrected point          end information ─S515
                            │                   │
                            ▼
                        ( RETURN )
```

# Fig.19

Iv

Sp1,Sp2                                    Sp4

input line

y

x

*Fig. 20*

Iv

P1,P2        P3,P4

movement direction of icon

Fig.21

# Fig.22

```
        ( position correction )
                 │
                 ▼
┌──────────────────────────────────────────────┐
│ obtain z-direction position of position       │── S301
│ detection plane Iv                            │
└──────────────────────────────────────────────┘
                 │
        S302     ▼
            ╱ user's finger Fg ╲         No
          ╱ has reached position ╲──────────────────────┐
          ╲  detection plane Iv? ╱                       │
            ╲                   ╱                         │
                 │ Yes                                    │
        S304     ▼                                        │
            ╱  during  ╲        No                        │
          ╱   entering  ╲──────────────┐                 │
          ╲  movement?  ╱               │                 │
            ╲         ╱          S311    ▼                 │
                 │ Yes              ╱ just after ╲   No    │
                 │                ╱ z-direction    ╲───────┤
                 │                ╲ position is    ╱       │
                 │                  ╲ stabilized? ╱        │
                 │                    ╲         ╱          │
                 │                       │ Yes             │
 S312 ┌────────────────────┐            ▼                  │
      │ second reference   │    S305 ┌──────────────────┐  │
      │ point =            │         │ set correction   │  │
      │ current position   │         │ coefficients     │  │
      └────────────────────┘         └──────────────────┘  │
                 │                        │                 │
                 │                        ▼         S310    │
                 │              S306 ┌──────────────┐       ▼
                 │                   │ correction   │  ┌──────────────────┐
                 │                   │ calculation  │  │ set first        │
                 │                   └──────────────┘  │ reference point  │
                 │                        │            └──────────────────┘
 S313 ┌────────────────────┐             ▼                  │
      │ operation position │    ┌──────────────────┐        │
      │ = current position │    │ operation        │── S307 │
      │ on position        │    │ position =       │        │
      │ detection plane    │    │ corrected        │        │
      └────────────────────┘    │ position         │        │
                 │              └──────────────────┘        │
                 │                        │                 │
                 │◄───────────────────────┴─────────────────┘
                 ▼
            ( RETURN )
```

Fig. 23

Europäisches
Patentamt

European
Patent Office

Office européen
des brevets

**EUROPEAN SEARCH REPORT**

Application Number

EP 16 19 2824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 770 412 A1 (FUNAI ELECTRIC CO [JP]) 27 August 2014 (2014-08-27) | 1,4,5, 8-13 | INV. G06F3/042 |
| Y | * figures 3, 6-8 * * paragraphs [0038] - [0056] * | 2,3,6,7 | G02B27/22 |
| Y | US 2011/175832 A1 (MIYAZAWA YUSUKE [JP] ET AL) 21 July 2011 (2011-07-21) * paragraph [0191] - paragraph [0198] * | 2,3 | |
| Y | US 2014/025263 A1 (GEYER CHRISTOPH [DE]) 23 January 2014 (2014-01-23) * paragraph [0013] - paragraph [0015] * * paragraph [0024] * | 6,7 | |
| X | US 2014/300584 A1 (NISHIOKA KEN [JP]) 9 October 2014 (2014-10-09) * paragraph [0053] - paragraph [0063] * | 1,4,5, 8-13 | |
| A | US 2002/140633 A1 (RAFII ABBAS [US] ET AL) 3 October 2002 (2002-10-03) * paragraph [0049] * | 1-14 | TECHNICAL FIELDS SEARCHED (IPC) |
| A | US 2010/231522 A1 (LI DONG GE [US]) 16 September 2010 (2010-09-16) * paragraph [0068] - paragraph [0072] * * paragraph [0116] * | 1-14 | G06F B60K G02B |

The present search report has been drawn up for all claims

| Place of search | Date of completion of the search | Examiner |
|---|---|---|
| Berlin | 24 January 2017 | Bengtsson, Johan |

EPO FORM 1503 03.82 (P04C01)

## ANNEX TO THE EUROPEAN SEARCH REPORT
## ON EUROPEAN PATENT APPLICATION NO.

EP 16 19 2824

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2017

| Patent document cited in search report | | Publication date | Patent family member(s) | | Publication date |
|---|---|---|---|---|---|
| EP 2770412 | A1 | 27-08-2014 | EP | 2770412 A1 | 27-08-2014 |
| | | | JP | 2014164372 A | 08-09-2014 |
| | | | US | 2014240681 A1 | 28-08-2014 |
| US 2011175832 | A1 | 21-07-2011 | CN | 102129314 A | 20-07-2011 |
| | | | JP | 2011170834 A | 01-09-2011 |
| | | | US | 2011175832 A1 | 21-07-2011 |
| US 2014025263 | A1 | 23-01-2014 | CN | 103492987 A | 01-01-2014 |
| | | | DE | 102011011802 A1 | 23-08-2012 |
| | | | EP | 2676180 A1 | 25-12-2013 |
| | | | KR | 20130126967 A | 21-11-2013 |
| | | | KR | 20150091428 A | 10-08-2015 |
| | | | US | 2014025263 A1 | 23-01-2014 |
| | | | WO | 2012110207 A1 | 23-08-2012 |
| US 2014300584 | A1 | 09-10-2014 | EP | 2790049 A1 | 15-10-2014 |
| | | | EP | 3062140 A1 | 31-08-2016 |
| | | | JP | 2014203323 A | 27-10-2014 |
| | | | US | 2014300584 A1 | 09-10-2014 |
| | | | US | 2016162120 A1 | 09-06-2016 |
| | | | US | 2016342283 A1 | 24-11-2016 |
| US 2002140633 | A1 | 03-10-2002 | US | 2002140633 A1 | 03-10-2002 |
| | | | WO | 02063601 A1 | 15-08-2002 |
| US 2010231522 | A1 | 16-09-2010 | NONE | | |

EPO FORM P0459

For more details about this annex : see Official Journal of the European Patent Office, No. 12/82

**EP 3 153 950 A1**

**Patent documents cited in the description**

- JP 2015200290 A
- JP 2016185880 A
- JP 2012003690 A
- JP 2010113397 W